# EUROPÄISCHE PATENTSCHRIFT

(11) **EP 3 174 690 B1**
(45) Veröffentlichungstag und Bekanntmachung des Hinweises auf die Patenterteilung: **27.05.2020**
(21) Anmeldenummer: 15745478.6
(22) Anmeldetag: 31.07.2015
(51) Int. Cl.: B29C 64/129, B29C 64/255, B29C 64/307, B33Y 30/00, B29C 31/02

(54) **STEREOLITHOGRAFIEVORRICHTUNG MIT BEHÄLTERBAUEINHEIT**
STEREOLITHOGRAPHY APPARATUS WITH CONTAINER ASSEMBLY
DISPOSITIF DE STÉRÉOGRAPHIE À UNITÉ MODULAIRE FORMANT CONTENANT

(30) Priorität: 01.08.2014 DE 102014215213; 01.08.2014 DE 102014215218
(43) Veröffentlichungstag der Anmeldung: 07.06.2017
(73) Patentinhaber: BEGO Bremer Goldschlägerei Wilh.-Herbst GmbH & Co KG, 28359 Bremen (DE)
(72) Erfinder: LAMBRECHT, Heinz, 28359 Bremen (DE); TREGUBOW, Sergej, 26180 Rastede (DE)
(74) Vertreter: Eisenführ Speiser
(86) Internationale Anmeldenummer: PCT/EP2015/067710
(87) Internationale Veröffentlichungsnummer: WO 2016/016443

(56) Entgegenhaltungen:
- EP-A1- 1 253 002
- WO-A1-2014/016668
- DE-U1- 9 415 849

## Beschreibung

Die Erfindung betrifft eine Stereolithografievorrichtung, umfassend:, einen Behälter zur Aufnahme eines flüssigen, durch Bestrahlung aushärtbaren Materials, eine Substratplatte, eine Aktuatoreinrichtung zur Erzeugung einer Relativbewegung zwischen dem Behälter und der Substratplatte, und eine Bestrahlungsvorrichtung zur selektiven Bestrahlung des in dem Behälter angeordneten Materials.

Ein weiterer Aspekt der Erfindung ist ein Verfahren zur Herstellung dreidimensionaler Formkörper mittels Stereolithografie, mit den Schritten: Befestigen eines Behälters mit einem darin angeordneten flüssigen, durch Bestrahlung aushärtbaren Material an einer Rahmenvorrichtung, schichtweises Herstellen des dreidimensionalen Formkörpers durch mehrfaches Wiederholen einer Schrittfolge mit den Schritten: relatives Bewegen einer an der Rahmenvorrichtung lösbar befestigten Substratplatte zu dem Behälter mittels einer an der Rahmenvorrichtung befestigten Aktuatoreinrichtung um eine vorbestimmte Schichtdicke, Füllen eines durch die relative Bewegung entstandenen Zwischenraums mit dem flüssigem Material, und selektives Aushärten des in dem Zwischenraum angeordneten Materials indem mittels einer an der Rahmenvorrichtung befestigten Bestrahlungsvorrichtung das Material in auszuhärtenden Bereichen selektiv bestrahlt wird.

Stereolithografieeinrichtungen und -verfahren dieser Art dienen dazu, um dreidimensionale Objekte herzustellen. Die Stereolithografie verwendet grundsätzlich als Ausgangsmaterial ein flüssiges Medium, das durch Einwirkung einer Strahlung ausgehärtet, also in einen festen Zustand versetzt werden kann. Typischerweise werden bei der Stereolithografie lichtaushärtende Kunststoffe eingesetzt, wie zum Beispiel Harzsysteme auf Acrylatbasis oder Epoxidbasis. Es können jedoch auch alle anderen Arten von strahlungsaushärtbaren Materialien zum Einsatz kommen. Zur Aushärtung wird eine Strahlung verwendet, die als sichtbares Licht, UV-Licht oder jegliche andere elektromagnetische Strahlung mit einer geeigneten Wellenlänge zur Aushärtung des Materials eingesetzt werden.

Die Stereolithografie folgt dabei dem Prinzip, dass ein dreidimensionaler Formkörper schichtweise aufgebaut wird, indem aufeinanderfolgende Schichten aus dem aushärtbaren Material hergestellt werden. Die Schichten werden dabei solcherart ausgehärtet, dass jeweils ein entsprechender Querschnitt durch den Formkörper der Strahlung ausgesetzt und somit selektiv ausgehärtet wird. Zugleich mit dieser Aushärtung werden die selektiv ausgehärteten Schichtanteile mit einer im Schritt zuvor hergestellten Schicht verbunden. Funktionell realisiert wird dieses Prinzip solcherart, dass der Formkörper auf einer Substratplatte aufgebaut wird, die sukzessive um eine Schichtdicke in ein Flüssigkeitsbad aus dem aushärtbaren Material abgesenkt wird, wobei nach jeder schichtweisen Absenkung der Substratplatte durch entsprechende selektive Bestrahlung des flüssigen Materials, das sich in den durch die schichtweise Absenkung der Substratplatte gebildeten Raum bewegt hat, selektiv, also in vorbestimmten Teilbereichen ausgehärtet wird.

US 4,575,330 zeigt in Fig. 3 eine solche Stereolithografievorrichtung, die nach dem Prinzip der sukzessiven Absenkung einer Substratplatte in ein Flüssigkeitsbad arbeitet und die sich hierdurch jeweils an der Oberfläche des Flüssigkeitsbades bildenden Flüssigkeitsschichten selektiv aushärtet, um hierdurch den Formkörper schichtweise herzustellen. In Fig. 4 derselben Druckschrift ist ein demgegenüber umgekehrtes Prinzip gezeigt, bei dem eine Substratplatte sukzessive in einem Flüssigkeitsbad angehoben wird und der Formkörper auf der Unterseite der Substratplatte aufgebaut wird, indem die sich durch das schichtweise sukzessive Anheben der Substratplatte bildenden neuen Flüssigkeitsschichten durch eine strahlungsdurchlässige Bodenfläche der die Flüssigkeit aufnehmenden Wanne hindurch bestrahlt werden.

Aus DE 94 15 849 U ist eine Stereolithografievorrichtung bekannt, welche eine Bestrahlung einer jeweils nahe der Oberfläche des Bades zu verfestigende Schicht der Flüssigkeit vorsieht. Eine Trägerplatte ist unterhalb dieser Badoberfläche angeordnet und wird mittels einer Antriebseinrichtung die lösbar über eine Haltestange mit der Substratplatte verbunden ist während des Herstellungsprozesses vertikal abgesenkt. Die Haltestange ist durch den Boden des Behältes geführt. Nach Lösung der Kupplung zwischen Antriebseinrichtung und Haltestange kann dem Behälter mit der darin verbleibenden Substratplatte längs von Schienen fortbewegt werden und ausgewechselt werden. Dieses Dokument offenbart eine Vorrichtung nach dem Oberbegriff des Anspruchs 1 und ein Verfahren nach dem Oberbegriff des Anspruchs 13.

Grundsätzlich eignen sich diese beiden Prinzipien für die Herstellung individueller Prototypen mittels des Stereolithografieverfahrens. Sie weisen jedoch verschiedene Nachteile auf, die für eine praktische Handhabung und schnelle Durchführung des Stereolithografieprozesses hinderlich sind. So ist zum einen bei dem Stereolithografieverfahren mit Absenkung der Plattform und Belichtung von oben eine große Flüssigkeitsmenge in der Flüssigkeitswanne erforderlich, und die Entnahme des fertiggestellten Formkörpers sowie das Abfließen nicht ausgehärteten Flüssigkeitsmaterials aus den Hohlräumen stellt einen aufwändigen und schwierig zu handhabenden Prozess dar. Bei der Stereolithografie mit Anhebung der Plattform und Belichtung von unten ist zwar grundsätzlich eine geringere Flüssigkeitsmenge erforderlich, jedoch muss der Flüssigkeitspegel stets so gehalten werden, dass ein sicheres Nachfließen der Flüssigkeit auch bei dem während des Herstellungsverfahrens auftretenden Verbrauch und Anheben des verbrauchten (ausgehärteten) Flüssigkeitsmaterials aus dem Bad gewährleistet ist. Auch hier wird daher typischerweise eine größere Menge an Flüssigkeit eingefüllt.

Bei diesen Verfahren besteht jedoch das grundsätzliche Problem, dass die ausgehärtete Flüssigkeit jeweils an der strahlungsdurchlässigen Bodenfläche der Flüssigkeitswanne anhaften kann. Aus EP 1 439 052 B1 sind hierzu aufwändige Maßnahmen und Vorrichtungen zur Vermeidung dieser Anhaftung mittels einer Folie bekannt. Problematisch an der Verwendung einer solchen Folie ist jedoch, dass auch die Antihaftfolie dazu neigt, in geringem Maße an den ausgehärteten Bereichen einer darauf hergestellten Schicht zu haften. Diese Haftung kann durch die kleine Bewegung der Substratplatte zur Herstellung der nächsten Schicht nicht überwunden werden, sodass kein flüssigkeitsgefüllter Spalt entsteht. Es ist daher bekannt, die Substratplatte um eine größere Wegstrecke anzuheben, um die zuletzt gefertigte Schicht von der Antihaftfolie sicher abzulösen und die Substratplatte dann wieder abzusenken, um die nächste Schicht zu fertigen. Diese Vorgehensweise ist jedoch zeitaufwendig.

Zur Verkürzung der Fertigungsdauer ist es bekannt, die Kraft, die zur Anhebung der Substratplatte notwendig ist, zu erfassen und anhand dieser Kraft die Ablösung zwischen der zuletzt gefertigten Schicht und der Antihaftfolie zu ermitteln und die Substratplatte unmittelbar nach dieser Ablösung abzusenken. Diese Vorgehensweise erfordert aber einen Kraftsensor und eine aufwendige Regelung und hat sich als fehleranfällig erwiesen.

Ein weiteres generelles Problem, welches bei Stereolithografievorrichtungen und -verfahren bekannter Bauart auftritt, ist die notwendige Kalibrierung der Substratplatte in Bezug auf die Positionierung der Flüssigkeitswanne, der Substratplatte und der Strahlungsausrichtung. Die Strahlung wird typischerweise als Laserstrahlung oder fokussierter Strahlengang oder maskiertes Strahlungsbild bereitgestellt und bedarf für eine Fertigung des Formkörpers mit geringen Toleranzen einer präzisen relativen Positionierung von Substratplatte bzw. der jeweils auszuhärtenden Schicht einerseits und der Bestrahlungsvorrichtung andererseits. Bei der Methode der Bestrahlung von unten kommt zusätzlich noch eine exakte Positionierung in Bezug auf die Wanne, in der die Flüssigkeit aufgenommen ist, hinzu. Es ist für eine exakte Fertigung eines Formkörpers erforderlich, dass die Substratplatte bezüglich der Fläche, auf welcher der Formkörper aufgebaut wird, exakt parallel zur Flüssigkeitsoberfläche (bei Bestrahlung von oben) bzw. exakt parallel zum Wannenboden (bei Bestrahlung von unten) ausgerichtet ist, um eine gleichmäßige Schichtdicke der ersten Schicht zu erzielen und Folgefehler für nachfolgende Schichten zu vermeiden. Diese Positionierung oder Referenzierung bzw. Kalibrierung der mechanisch bewegten Bauteile ist zeitaufwändig und fehlerträchtig und verlangsamt daher den Herstellungsprozess mittels Stereolithografie bzw. erhöht das Risiko für eine Produktion von nicht ausreichend maßgetreuen Formkörpern. Es ist bekannt, die Substratplatte in einer definierten Position an einen Aktuator anzukoppeln und hierdurch die Parallelität von Substratplatte in Bezug auf den Wannenboden zu erzielen (x- und y-Achse) und das exakte Anfahren einer vertikalen Ausgangsposition (z-Achse) zu ermöglichen. Dieser Kopplungs- und Positionierungsprozess ist jedoch zweitaufwendig und verursacht daher eine Verzögerung des Fertigungsprozesses.

Ein weiteres Problem besteht darin, dass zum Zwecke dieser Referenzierung der notwendigen Bauteile eine Beobachtungsmöglichkeit für den Benutzer einer Stereolithografievorrichtung vorhanden sein muss, um den Prozess der Referenzierung, das Anfahren des Startpunktes und den Ablauf des Verfahrens durchführen und überwachen zu können. Zu diesem Zweck ist es bekannt, durchsichtige Wannenbehälter für die Aufnahme der Flüssigkeit zu verwenden und diese so groß und offen zu dimensionieren, dass eine solche Einsichtnahme für den Benutzer möglich ist und auch Manipulationen für den Benutzer händisch an der Substratplatte möglich sind. Nachteilig hieran ist jedoch, dass das Flüssigkeitsbad aufgrund dieser Notwendigkeit verschmutzen kann und durch die auftretende Lichteinwirkung eine Verschlechterung der Qualität der Flüssigkeit mit gegebenenfalls teilweiser Aushärtung in ungewünschten Bereichen auftreten kann. Schließlich besteht ein weiterer Nachteil der vorbekannten Stereolithografieverfahren darin, dass durch die oftmals langwierige Einjustierung eine Entmischung des Flüssigkeitsbades stattfinden kann und insbesondere dann, wenn mehrere Herstellungsprozesse aufeinanderfolgend aus einem Flüssigkeitsbad heraus durchgeführt werden, eine solche Entmischung mit Verschlechterung der Eigenschaften der aushärtbaren Flüssigkeit auftreten kann.

Der Erfindung liegt die Aufgabe zugrunde, eine Stereolithografievorrichtung bereitzustellen, welche eine zeitlich schnellere Herstellung ermöglicht, ohne hierdurch die Gefahr der Verunreinigung und unerwünschter Lichteinwirkung zu erhöhen.

Diese Aufgabe wird erfindungsgemäß mit einer Stereolithografie-Vorrichtung nach Anspruch 1 und mit einem Verfahren nach Anspruch 13 gelöst.

Erfindungsgemäß wird die Stereolithografievorrichtung solcherart fortgebildet, dass die Flüssigkeitswanne als Behälter ausgeführt ist und in einer Baueinheit mit der Substratplatte ausgebildet ist. Der Behälter und die Substratplatte müssen daher nicht, wie im Stand der Technik, als separate Wanne einerseits in die Rahmenvorrichtung eingesetzt werden und darin arretiert werden und als Substratplatte andererseits in die Rahmenvorrichtung eingesetzt und darin arretiert werden. Stattdessen wird die Baueinheit aus Substratplatte und Behälter in einer vormontierten Ausführung gemeinschaftlich und daher in einem Schritt in die Rahmenvorrichtung eingesetzt. Durch diese Ausführung als Baueinheit ist die Substratplatte in Bezug auf den Behälter bereits in einer definierten Position angeordnet. Dies hat den Vorteil zur Folge, dass eine Referenzierung bzw. das Anfahren eines Startpunktes für die Substratplatte in Bezug auf den Behälter entweder gänzlich entfallen kann, weil bereits eine eindeutige Position der Substratplatte in Bezug auf alle drei Raumrichtungen in dem Behälter besteht oder die Referenzierung erheblich vereinfacht wird, weil die Positionierung der Substratplatte in Bezug auf den Behälter bereits in Bezug auf eine oder zwei Raumrichtungen definiert ist.

Vorteilhaft an der erfindungsgemäßen Ausführungsform ist weiterhin die wesentlich geringere Verschmutzung der Flüssigkeit im Behälter und das geringere Abdampfen leichtflüssiger Bestandteile aus der Flüssigkeit aufgrund der insgesamt weniger intensiven manuellen Handhabung, die mit der Flüssigkeit durchgeführt werden muss. Hierdurch bleibt die Flüssigkeit über einen wesentlich längeren Zeitraum einsetzbar und muss folglich nicht so häufig ausgetauscht werden. Dies ermöglicht es, eine größere Menge an Flüssigkeit im Behälter vorzuhalten, also einen höheren Füllstand im Behälter bereitzustellen. Der hierdurch wiederum erzielte höhere hydrostatische Druck im Bodenbereich der Flüssigkeit hat zwei unmittelbare Vorteile für den Herstellungsprozess: (i) Er sorgt für ein besseres Nachfließen der Flüssigkeit in den Spalt, der sich nach Abheben einer gefertigten Schicht von dem Behälterboden bildet. (ii) Bei Einsatz einer Antihaftfolie sorgt er für eine bessere Anpressung der Folie an die Bodenplatte des Behälters.

Der erfindungsgemäß eingesetzte Behälter kann vorzugsweise eine zylindrische Form mit senkrecht stehender Zylinderachse aufweisen, alternativ sind auch mehreckige Formen in bestimmten Anwendungen vorteilhaft. Das Innenraumvolumen des Behälters liegt vorzugsweise oberhalb einer Untergrenze von 0,25 Liter, 0,5 Liter oder 1 Liter und/oder übersteigt weiter vorzugsweise eine Obergrenze von 0,5 Liter, 1 Liter oder 2 Liter nicht. Der Durchmesser des Behälters beträgt vorzugsweise mehr als 2,5cm, 5cm oder mehr als 10cm und/oder ist nicht größer als 5cm, 10cm oder 20cm.

Die Bestrahlungsvorrichtung ist vorzugsweise dazu ausgebildet, um eine Belichtungszeit von 2s - 30s und eine Belichtungsenergie von 0,5 bis 1 W/mm², insbesondere 0,7 +/- 0,1 W/mm²,. Die Bestrahlungsvorrichtung ist vorzugsweise ausgebildet, um eine Strahlung in einer Wellenlänge von 300nm bis 900nm, insbesondere 315-490nm abzugeben und/oder weist weiter vorzugsweise eine Auflösung in der bestrahlten Ebene von mindestens 600 x 800 Pixel, vorzugsweise 1920 x 1080 Pixel auf. Die bestrahlte Ebene ist vorzugsweise nicht kleiner als 25cm², insbesondere nicht kleiner als 50cm².

Die Aktuatoreinrichtung ist vorzugsweise solcherart ausgebildet, dass eine minimale Vorschubdistanz - und damit eine minimale Schichtdicke einer einzelnen Schicht des Formkörpers - von nicht mehr als 0,001mm, 0,01mm oder 0,1mm ausgeführt werden kann.

Unter einer Baueinheit ist hierbei eine Zusammenstellung von Komponenten zu verstehen, die mechanisch direkt miteinander verbunden sind und folglich in einer definierten Lage oder Ausrichtung zueinander stehen. Eine Baueinheit kann daher von einem Benutzer einzeln gehandhabt werden, ohne dass hierbei die in der Baueinheit enthaltenen Komponenten zueinander in Position vom Benutzer gehalten werden müssen. Der Behälter und die Substratplatte können dabei lösbar und/oder über eine entsprechende Führung miteinander verbunden sein, sodass eine Trennung von Behälter und Substratplatte auch möglich ist.

Durch die Ausführung von Behälter und Substratplatte als Baueinheit entfällt zudem die Notwendigkeit, die Substratplatte innerhalb der Stereolithografievorrichtung in die Flüssigkeitswanne bzw. den Behälter einzusetzen, darin zu justieren und einen Referenzpunkt anzufahren. Daher ist eine manuelle Betätigung und Manipulation der Substratplatte oder des Behälters durch den Benutzer innerhalb der Stereolithografievorrichtung nicht mehr notwendig, und dies erlaubt es, Behälter und Substratplatte kompakter zu dimensionieren und in ihren Abmessungen solcherart aufeinander abzustimmen, dass nur eine geringe Behältergröße erforderlich ist. Die Menge an flüssigem Material innerhalb des Behälters kann hierdurch reduziert werden, und durch den kleineren Behälter wird die Verschmutzungsgefahr verringert.

Schließlich wird durch die Ausführung von Behälter und Substratplatte als Baueinheit es auch nicht mehr erforderlich, dass ein Benutzer die Substratplatte innerhalb des Behälters optisch erfassen kann und deren Positionierung und Ausrichtung überwachen kann. Der Behälter der erfindungsgemäßen Stereolithografievorrichtung muss daher nicht lichtdurchlässig sein, um eine solche visuelle Beobachtung zu ermöglichen, sondern kann teilweise lichtundurchlässig ausgeführt sein, um den unerwünschten Zutritt von Strahlung in den Behälterinnenraum zu verhindern.

Die Substratplatte hat vorzugsweise eine untere ebene Fläche mit einem daran ausgebildeten, nach unten vorstehenden Abstandshalter. Dies ermöglicht es, die Substratplatte vor dem Aufbau der ersten Schicht abzusenken, z. B. rein schwerkraftbedingt, und auf der Bodenplatte des Behälters aufsetzen zu lassen, und hierbei einen für die Herstellung der ersten Schicht ausreichenden Abstand zu erhalten. Der Abstandshalter kann insbesondere als äußerer umlaufender Vorsprung, beispielsweise als Kragen, ausgeführt sein. Hierdurch wird eine Beschädigung der Bodenplatte bzw. einer dort angeordneten Antihaft-Folie in einem für den Herstellungsprozess wichtigem Mittelbereich vermieden, wenn eine Relativbewegung zwischen der Substratplatte und der Bodenplatte des Behälters auftritt. Der Abstandshalter kann die Höhe einer Schichtdicke oder eine kleinere Höhe aufweisen.

Gemäß einer ersten bevorzugten Ausführungsform ist vorgesehen, dass der Behälter eine für die Strahlung der Bestrahlungsvorrichtung undurchlässige Seitenwand aufweist. Der Behälter kann grundsätzlich so ausgeführt sein, dass er einen rechteckigen Querschnitt aufweist, also insgesamt quaderförmig ausgebildet ist, und folglich über vier Seitenwände verfügt. In diesem Fall kann eine dieser Seitenwände, mehrere oder alle Seitenwände strahlungsundurchlässig sein. Ebenso kommen Behälterformen mit rundem Querschnitt, also einer zylindrischen Seitenwand, in Betracht. In diesem Fall kann die gesamte zylindrische Seitenwand strahlungsundurchlässig sein oder Abschnitte der zylindrischen Seitenwand strahlungsundurchlässig ausgeführt sein.

Unter strahlungsundurchlässig ist hierbei zu verstehen, dass die Seitenwand zumindest für die Strahlung der Bestrahlungsvorrichtung undurchlässig ist, diese Strahlung also reflektiert oder absorbiert. Dies schließt nicht aus, dass die Seitenwand auch für Strahlungen mit anderer Wellenlänge undurchlässig ist. Insbesondere ist es bevorzugt, wenn die Seitenwand für Strahlungen in allen Wellenlängenbereichen undurchlässig ist, die für das flüssige Material zu einer teilweisen oder vollständigen Aushärtung führen. Durch diese Ausgestaltung kann das flüssige Material in dem Behälter über einen langen Zeitraum gelagert werden, ohne dass sich dessen Qualität dabei verschlechtert. Eine unerwünschte Aushärtung des Materials durch Streulicht oder sonstige Strahlungsquellen kann hierdurch ausgeschlossen oder erheblich vermindert werden.

Erfindungsgemäß ist vorgesehen, dass der Behälter eine für die Strahlung der Bestrahlungsvorrichtung durchlässige Bodenplatte aufweist und die Bestrahlungsvorrichtung ausgebildet ist, um die Bestrahlung von unten in den Behälter einzuleiten. Durch eine Bodenplatte, welche für die Strahlung der Bestrahlungsvorrichtung durchlässig ist, wird eine Möglichkeit geschaffen, den dreidimensionalen Formkörper innerhalb des Behälters aufzubauen, indem eine schichtweise Aushärtung mittels Strahlungseinwirkung von unten erfolgt. Diese Konfiguration mit einer Bestrahlung von unten und einer sukzessiven Anhebung der Substratplatte innerhalb des Behälters ist für die erfindungsgemäße Ausgestaltung der Stereolithografievorrichtung besonders vorteilhaft, da bei dieser Funktionsweise der Behälter keinen Strahlungszutritt von oben ermöglichen muss und folglich besonders kompakt und abgeschlossen aufgebaut sein kann.

Dabei ist es weiter bevorzugt, wenn auf der zum Behälterinnenraum weisenden Seite der Bodenplatte eine Antihaftbeschichtung aufgebracht ist. Durch diese Ausführung der Bodenplatte wird ein Anhaften des ausgehärteten Materials an der Bodenplatte zuverlässig verhindert. Als eine Antihaftbeschichtung ist hierbei eine direkt auf die Bodenplatte aufgebrachte Materialschicht zu verstehen, die also durch unmittelbar adhäsive Kräfte an der Bodenplatte anhaftet. Eine solche Antihaftbeschichtung ist gegenüber Folien, die ein Anhaften verhindern sollen, vorteilhaft, da sie in zuverlässiger Form einen Spalt zwischen dem Formkörper und der Bodenplatte sich ausbilden lässt, in den das flüssige Material nachfließt, wenn die Substratplatte um eine Schichtdicke angehoben wird. Als eine solche Antihaftbeschichtung eignen sich insbesondere Fluorkunststoffe, beispielsweise Perfluoralkoxy-Polymere (PFA) oder Fluorethylenpropylen-Polymere (FEP), die über eine sehr geringe Adhäsion verfügen und somit eine zuverlässige Trennung der ausgehärteten Schicht von der Bodenplatte herbeiführen.

Alternativ zu dieser Ausführungsform kann erfindungsgemäß eine Antihaftfolie, beispielsweise eine FEP- oder PFA-Folie auf der zum Behälterinnenraum weisenden Seite der Bodenplatte angeordnet sein und diese Antihaftfolie allseitig gegenüber der Bodenplatte fluiddicht eingespannt sein und ein vordefiniertes Volumen größer null zwischen der Antihaftfolie und der Bodenplatte fluiddicht einschließen. Eine solche Antihhaftfolie kann ebenso wie eine Antihaftbeschichtung ein Anhaften der untersten Schicht des Formkörpers an der Bodenplatte zuverlässig verhindern. Die Antihaftfolie weist darüber hinaus den Vorteil auf, dass sie bei Nachlassen der Anti-Haft-Wirkung leicht austauschbar ist, ohne dass hierzu die Bodenplatte getauscht werden muss, wie dies bei einer Antihaftbeschichtung regelmäßig der Fall wäre.

Aus EP 1439052B1 ist eine solche Antihaftfolie bekannt. Entgegen der aus diesem Stand der Technik vorbekannten Technologie ist die erfindungsgemäß vorgesehene Antihaftfolie allseitig gegenüber der Bodenplatte fluiddicht eingespannt und schließt somit ein vordefiniertes Volumen fluiddicht zwischen Bodenplatte und Antihaftfolie ein. Hierdurch wird eine Änderung der Form des eingeschlossenen Volumens ermöglicht und folglich eine Konturänderung der Antihaftfolie in Bezug auf die Geometrie der Bodenplatte eröffnet. Diese Möglichkeit der Konturänderung erlaubt es, dass bei allen Arten von Geometrien der untersten Schicht des Formkörpers ein Schäleffekt auftritt, wenn der Formkörper von der Antihaftfolie abgezogen wird, wodurch eine Entfernung des Formkörpers von der Antihaftfolie mit geringem Kraftaufwand erreicht wird. Bei diesem Entfernungsvorgang wird kein Fluid, also weder ein Gas noch eine Flüssigkeit, in den Zwischenraum zwischen Antihaftfolie und Bodenplatte zugeführt, wodurch eine kontrollierte Abfuhr eines solchen Fluids nicht erforderlich ist, um die optisch brechenden oder reflektierenden Eigenschaften des Systems aus Antihaftfolie, Bodenplatte und dazwischen befindlichem Volumen konstant zu halten.

Noch weiter ist es bevorzugt, wenn die Bodenplatte lösbar und abgedichtet mit der Behälterseitenwand verbunden ist. Grundsätzlich kann die Bodenplatte integral, also unlösbar und einstückig mit der Behälterseitenwand ausgeführt sein, wodurch eine zuverlässige Abdichtung zwischen Seitenwand und Bodenplatte erzielt wird. Es ist jedoch vorteilhaft, wenn die Bodenplatte lösbar und abgedichtet mit der Behälterseitenwand verbunden ist, um ein Austauschen der Bodenplatte möglich zu machen, wenn beispielsweise deren Strahlungsdurchlässigkeit infolge eines mehrfachen Gebrauchs herabgesetzt ist oder die Eigenschaften der Antihaftschicht nicht mehr zufriedenstellend sind. Dabei sind verschiedene Möglichkeiten der Befestigung der Bodenplatte an der Behälterseitenwand vorstellbar. Insbesondere ist es bevorzugt, wenn die Bodenplatte formschlüssig an der Behälterseitenwand befestigt ist, um hierdurch eine definierte Lage der Bodenplatte in Bezug auf die Behälterseitenwand zu erzielen. Eine solche definierte Lage ist für die spätere Referenzierung der Baueinheit aus Behälter und Substratplatte in der Stereolithografievorrichtung vorteilhaft, da hierdurch reproduzierbar eine obere Flächenlage der Bodenplatte erzielt wird.

Die erfindungsgemäße Stereolithografievorrichtung kann weiter fortgebildet werden durch einen Deckel, der lösbar mit dem Behälter verbunden ist, den Behälter verschließt und der vorzugsweise für die Strahlung der Bestrahlungsvorrichtung undurchlässig ist. Durch einen solchen Deckel wird der Behälter auch an seiner Oberseite verschlossen und hierdurch der Zutritt von Partikeln, Schmutz oder dergleichen in den Behälterinnenraum von oben verhindert. Der Deckel des Behälters kann dabei ebenfalls undurchlässig für die Strahlung der Bestrahlungsvorrichtung sein, um durch den Deckel die Qualität des flüssigen Materials innerhalb des Behälters über einen langen Zeitraum aufrechtzuerhalten. Der Deckel ist bevorzugt lösbar mit dem Behälter verbunden, also insbesondere lösbar mit einer oder mehreren Seitenwänden des Behälters verbunden, um den Deckel abnehmen zu können und die Substratplatte mitsamt dem hergestellten Formkörper aus dem Behälterinnenraum entfernen zu können. Vorzugsweise verschließt der Deckel den Behälter fluiddicht, also abgedichtet gegenüber Gasen und Flüssigkeiten.

Dabei ist es besonders bevorzugt, wenn die Aktuatoreinrichtung eine Kopplungsstange umfasst, die mit der Substratplatte verbunden ist und die sich durch den Deckel erstreckt und die vorzugsweise in dem Deckel für eine axiale Bewegung in Längsrichtung der Kopplungsstange geführt ist. Gemäß dieser Ausführungsform umfasst die Baueinheit aus Behälter und Substratplatte weiterhin eine Kopplungsstange, die mit der Substratplatte verbunden ist und die sich durch den Deckel erstreckt. Diese Kopplungsstange ist an dem Deckel geführt, also insbesondere durch eine Führungsausnehmung in dem Deckel hindurchgeführt und an dieser in Bezug auf zwei Raumrichtungen abgestützt und folglich für eine Bewegung in einer Raumrichtung geführt. Mittels der Kopplungsstange kann in einfacher Weise die Substratplatte mit der Aktuatoreinrichtung gekoppelt werden und die Bewegung der Aktuatoreinrichtung auf die Substratplatte übertragen werden, um die sukzessive Anhebung der Substratplatte im Laufe des Herstellungsprozesses auszuführen. Grundsätzlich kann die Kopplungsstange dabei auch gegen Verdrehung in Bezug auf den Deckel geführt sein, beispielsweise indem die Kopplungsstange ein nicht kreisförmiges Querschnittsprofil aufweist und in einer entsprechend kongruenten, nicht kreisförmigen Führungsbuchse im Deckel geführt ist. Hierdurch wird, bei entsprechend verdrehungsgesicherter Befestigung des Deckels an dem Behälter, eine reproduzierbare Positionierung von Behälter, Substratplatte und Kopplungsstange in Bezug auf die Rahmenvorrichtung ermöglicht, sodass die Referenzierung so genau und vereinfacht ist, dass gegebenfalls sogar eine Entnahme und ein Wiedereinsetzen des Behälters bei einer Unterbrechung eines Fertigungsprozesses nicht zu einer maßgeblichen Fertigungsungenauigkeit führen muss. Dieses nicht kreisförmige Querschnittsprofil bzw. die Verdrehsicherung kann sich dabei vorzugsweise nur über denjenigen Abschnitt der Kopplungsstange erstrecken, der während des Aufbaus des Formkörpers in der entsprechenden verdrehsichernden Führung läuft.

Diese Kopplungsstange kann vorzugsweise mit einer lösbaren Arretierungsvorrichtung zusammenwirken, die ausgebildet ist, um die Kopplungsstange in einer Position, in der die Substratplatte von der Bodenplatte abgehoben ist, vorzugsweise bis in einen Bereich benachbart zum Deckel des Behälters, also etwa im oberen Viertel oder Fünftel des Behälters angehoben ist, in Bezug auf die vertikale (z-) Achse zu arretieren und eine Rotation der Kopplungsstange um die vertikale Achse zu ermöglichen. Mittels einer solchen Arretierung und Rotation der Kopplungsstange wirde es ermöglicht, nach Fertigstellung eines Formkörpers diesen oberhalb des Flüssigkeitsbades zu positionieren und überschüssige Flüssigkeit abtropfen zu lassen. Durch eine zusätzliche Rotation um die z-Achse kann die Kopplungsstange und somit der daran über die Substratplatte befestigte Formkörper noch rotiert werden. Hierdurch wird eine Schleuderfunktion auf das überschüssige Flüssigkeitsmaterial ausgeübt, welches dadurch nach außen abgeschleudert, von den Seitenwänden des Behälters aufgefangen und in das Flüssigkeitsbad zur weiteren verwendung zurückgeführt wird. Für diese Rotation kann ein entsprechender Handgriff am oberen Ende der Kopplungsstange vorgesehen sein, oder die Kopplungsstange kann mit eine Aktuator zur Rotation der Kopplungsstange um ihre Längsachse gekoppelt sein. Die erfindungsgemäße Arretierungsvorrichtung kann bespielsweise in Form einer Umfangsnut in der Kopplungsstange mit einem darin einrastenden Arretierungselement an der Rahmenvorrichtung ausgeführt sein, wobei diese Arretierungselement beispielsweise eine in radialer Richtung federbelastete Kugel sein kann.

Die Kopplungseinrichtung kann beispielsweise in einer Verschraubung bestehen oder eine Klemmeinrichtung sein, die durch einen Schnellverschluss, beispielsweise einen Kniehebelverschluss, geöffnet und geschlossen werden kann. In der Kopplungseinrichtung wird die Kopplungsstange solcherart fixiert, dass sie die Relativbewegung von der Aktuatoreinrichtung auf die Substratplatte übertragen kann. Grundsätzlich ist zu verstehen, dass zwischen der Kopplungseinrichtung und der Aktuatoreinrichtung weitere mechanische Kraftübertragungselemente eingesetzt sein können.

Eine weitere bevorzugte Ausführungsform der erfindungsgemäßen Stereolithografievorrichtung weist eine elektronische Steuerungsvorrichtung auf, die ausgebildet ist, um eine schichtweise Herstellung des Formkörpers zu steuern, indem die Aktuatoreinrichtung und die Bestrahlungsvorrichtung zur Ausführung der Schrittfolge mit den Schritten: relatives Bewegen einer an der Rahmenvorrichtung lösbar befestigten Substratplatte zu dem Behälter mittels einer an der Rahmenvorrichtung befestigten Aktuatoreinrichtung um eine vorbestimmte Schichtdicke, Füllen eines durch die relative Bewegung entstandenen Zwischenraums mit dem flüssigem Material, und selektives Aushärten des in dem Zwischenraum angeordneten Materials indem mittels einer an der Rahmenvorrichtung befestigten Bestrahlungsvorrichtung das Material in auszuhärtenden Bereichen selektiv bestrahlt wird, ausgeführt werden und die weiterhin ausgebildet ist, um vor Beginn dieser Schrittfolge einen Mischvorgang zu steuern, bei dem die Aktuatoreinrichtung mindestens einmal, vorzugsweise mehrmals, für eine reziprokale Relativbewegung über eine Wegstrecke von mehreren Schichtdicken angesteuert wird. Gemäß dieser bevorzugten Ausführungsform wird der Fertigungsablauf mittels einer elektronischen Steuerungsvorrichtung gesteuert, die programmiert ist, um die Aktuatoreinrichtung und die Bestrahlungsvorrichtung entsprechend anzusteuern. Die Steuerungsvorrichtung ist zu diesem Zweck mit der Aktuatoreinrichtung und der Bestrahlungseinrichtung signaltechnisch gekoppelt und sendet Steuerungssignale an diese Vorrichtungen. Sie steuert einerseits die Schrittfolge einer schichtweisen Bewegung der Substratplatte mittels der Aktuatoreinrichtung und die Bestrahlung der jeweils in den Freiraum nachlaufenden Flüssigkeit durch die Bestrahlungsvorrichtung mit einer sequenziellen Aushärtung von Abschnitten dieser Schicht. Weiterhin ist die Steuerungsvorrichtung ausgebildet, um einen Mischvorgang anzusteuern. Bei diesem Mischvorgang wird die Aktuatoreinrichtung angesteuert und bewegt die Substratplatte einfach oder mehrfach auf und ab, wobei ein Weg durch die Substratplatte zurückgelegt wird, der größer ist als eine Schichtstärke und vorzugsweise mehrere Schichtstärken umfasst. Durch diese Bewegung der Substratplatte wird die Flüssigkeit in dem Behälter durchmischt, sodass Entmischungsvorgänge, die nach längerer Lagerung aufgetreten sein können, hierdurch aufgehoben werden. Die Mischbewegung wird als reziprokale Relativbewegung ausgeführt, das heißt die Substratplatte bewegt sich zumindest einmal hin und einmal her, vorzugsweise mehrfach hin und her, um durch diese Auf- und Abbewegung die Mischung zu erreichen.

Die elektronische Steuerungsvorrichtung kann weiterhin zusätzlich oder alternativ dazu ausgebildet sein, nach der letzten ausgeführten Schrittfolge des Herstellungsprozesses des Formkörpers die Aktuatoreinrichtung so anzusteuern, dass die Substratplatte und der schichtweise hergestellte Formkörper in eine Position oberhalb des flüssigen Materials in dem Behälter bewegt wird. Dies ist insbesondere dafür vorteilhaft, um ein Abtropfen der nicht ausgehärteten Flüssigkeit von und aus dem Formkörper zu erreichen. Gegebenenfalls kann die Aktuatoreinrichtung auch für eine solch große Wegstrecke angesteuert werden, dass die Substratplatte und der Formkörper mitsamt dem Deckel des Behälters abgehoben und aus dem Behälter herausgeführt werden, um den Formkörper nach oben herauszuziehen und für einen Bediener der Anlage das Ende des Fertigungsprozesses sichtbar zu machen und die Entnahme des Formkörpers zu ermöglichen.

Gemäß einer weiteren bevorzugten Ausführungsform wird die Stereolithografievorrichtung fortgebildet durch eine innerhalb des Behälters angeordnete Beleuchtungseinrichtung, die ausgebildet ist, um den Innenraum des Behälters mit einem sichtbaren Licht auszuleuchten, das eine Wellenlänge aufweist, die nicht zur Aushärtung des flüssigen Materials geeignet ist, oder gekennzeichnet durch einen zweiten Behälter mit einer innerhalb des zweiten Behälters angeordneten Beleuchtungseinrichtung, die ausgebildet ist, um den Innenraum des Behälters mit einer Strahlung auszuleuchten, die eine Wellenlänge aufweist, die zur Aushärtung des flüssigen Materials geeignet ist, wobei die Rahmenvorrichtung eine Befestigungseinheit zur wahlweisen Befestigung des Behälters oder des zweiten Behälters in einer definierten Position aufweist. Eine solche Beleuchtungseinrichtung kann dazu dienen, um den Innenraum des Behälters mit sichtbarem Licht auszuleuchten, damit ein Benutzer der Vorrichtung den Fertigungsfortschritt kontrollieren kann und weitere fertigungsrelevante Eigenschaften innerhalb des Behälters überprüfen kann. Bei dieser Ausgestaltung und Zweckbestimmung ist es sinnvoll, die Beleuchtungseinrichtung in einem Behälter und in Baueinheit mit diesem Behälter auszuführen, der auch eine Substratplatte beinhaltet. Alternativ kann eine solche Beleuchtungseinrichtung auch dazu dienen, um einen fertiggestellten Formkörper nachzuhärten. Bei einer solchen Nachhärtung wird der gesamte Formkörper mit einer Strahlung der Wellenlänge, die zur Aushärtung des flüssigen Materials geeignet ist, bestrahlt, diese Bestrahlung erfolgt nicht selektiv, sondern als diffuse Gesamtbestrahlung. Bei einer solchen Ausführungsform ist die Beleuchtungseinrichtung sinnvoll in einem zweiten Behälter angeordnet, in den der fertiggestellte Formkörper nach dem Fertigungsprozess eingesetzt werden kann. Dieser zweite Behälter kann entweder anstelle des Behälters, in dem die Fertigung stattfand, in die Rahmenvorrichtung eingesetzt und darin arretiert werden oder kann in der Rahmenvorrichtung bereits eingesetzt sein und dann entweder der Formkörper durch eine entsprechende Aktuatorbewegung und - verschiebung aus dem einen in den anderen Behälter überführt werden oder der zweite Behälter an die Position des Behälters, in dem die Fertigung stattfand, verfahren werden, beispielsweise nach Art einer Revolverbewegung der beiden Behälter.

Die erfindungsgemäße Stereolithografievorrichtung kann weiter fortgebildet werden durch einen weiteren Behälter mit einem Deckel und einer innerhalb des weiteren Behälters angeordneten Substratplatte, die mit einer durch den Deckel hindurchgeführten Kopplungsstange verbunden ist, wobei die Rahmenvorrichtung eine Befestigungseinheit zur wahlweisen Befestigung des Behälters oder des weiteren Behälters in einer definierten Position aufweist. Ein solcher weiterer Behälter, also ein zweiter oder dritter Behälter, kann zu verschiedenen Zwecken dienen. Die erfindungsgemäße Stereolithografievorrichtung eignet sich in besonderer Weise dazu, um einen, zwei oder mehr Behälter vorzuhalten und in die Rahmenvorrichtung einzusetzen oder darin eingesetzt vorrätig zu halten und durch entsprechende Verschiebeeinrichtungen wechselweise so platzieren zu können, dass die jeweilige Kopplungsstange der Behälter mit der Aktuatoreinrichtung gekoppelt werden können oder eine an der Aktuatoreinrichtung angekoppelte Kopplungsstange mit daran befestigter Substratplatte in den Behälter eingefahren werden kann. So kann ein weiterer Behälter dazu dienen, um darin eine Reinigungsflüssigkeit vorzuhalten, mit der überschüssiges, nicht ausgehärtetes flüssiges Material von einem fertiggestellten Formkörper entfernt werden kann. Ein weiterer Behälter kann alternativ dazu eingesetzt werden, um ein weiteres, anderes flüssiges, aushärtbares Material mit einer Substratplatte und gegebenenfalls einem Deckel und einer Kopplungsstange darin vorzuhalten, um nach Ende des Fertigungsprozesses in einem Behälter unmittelbar einen Fertigungsprozess in diesem weiteren Behälter starten zu können.

Gemäß einem weiteren Aspekt der Erfindung wird die der Erfindung zugrundeliegende Aufgabe gelöst durch ein Verfahren nach Anspruch 14.

Erfindungsgemäß erfolgt das selektive Bestrahlen durch eine für die Strahlung der Bestrahlungsvorrichtung durchlässige Bodenplatte.

Das Verfahren kann weiter fortgebildet werden, indem der Behälter einen Innenraum aufweist, in dem die Substratplatte angeordnet ist und der gegen eine Strahlung in der Wellenlänge der Bestrahlung der Bestrahlungsvorrichtung durch eine vollumfänglich seitlich begrenzende Behälterseitenwand abgeschirmt wird.

Das Verfahren kann weiter fortgebildet werden, indem ein Behälterdeckel lösbar mit dem Behälter verbunden wird und den Behälter verschließt, vorzugsweise fluiddicht verschließt, und dass der Innenraum gegen die Strahlung in der Wellenlänge der Bestrahlung der Bestrahlungsvorrichtung durch den Deckel abgeschirmt wird.

Das Verfahren kann weiter fortgebildet werden, indem eine mit der Substratplatte verbundene Kopplungsstange sich durch den Deckel erstreckt und in dem Deckel die relative Bewegung der Substratplatte zu dem Behälter als axiale Bewegung in Längsrichtung der Kopplungsstange geführt wird.

Das Verfahren kann weiter fortgebildet werden, indem die Kopplungsstange beim Einsetzen des Behälters in die Rahmenvorrichtung mittels einer Kopplungseinrichtung lösbar mit einem mechanischen Aktuator gekoppelt wird, die Relativbewegung zwischen dem Behälter und der Substratplatte über die Kopplungseinrichtung und die Kopplungsstange übertragen wird, und die Kopplungsstange nach dem Herstellen des dreidimensionalen Formkörpers mittels der Kopplungseinrichtung wieder von dem mechanischen Aktuator gelöst wird, und der Behälter gemeinsam mit der Kopplungsstange und der Substratplatte als eine Baueinheit aus der Rahmenvorrichtung entnommen wird.

Das Verfahren kann weiter fortgebildet werden, indem mittels einer elektronischen Steuerungsvorrichtung eine schichtweise Herstellung des Formkörpers gesteuert wird, indem die Aktuatoreinrichtung und die Bestrahlungsvorrichtung zur Ausführung der Schrittfolge angesteuert werden, und dass die elektronische Steuerungsvorrichtung vor Beginn der Schrittfolge einen Mischvorgang ansteuert, bei dem die Aktuatoreinrichtung mindestens einmal, vorzugsweise mehrmals für eine reziprokale Relativbewegung über eine Wegstrecke von mehreren Schichtdicken angesteuert wird.

Das Verfahren kann weiter fortgebildet werden, indem mittels einer elektronischen Steuerungsvorrichtung eine schichtweise Herstellung des Formkörpers gesteuert wird, indem die Aktuatoreinrichtung und die Bestrahlungsvorrichtung zur Ausführung der Schrittfolge angesteuert werden, und dass die elektronische Steuerungsvorrichtung nach der letzten ausgeführten Schrittfolge die Aktuatoreinrichtung ansteuert, um die Substratplatte und den schichtweise hergestellten Formkörper in eine Position oberhalb des flüssigen Materials in dem Behälter zu bewegen.

Das Verfahren kann noch weiter fortgebildet werden, indem der fertiggestellte Formkörper mittels eines Stempels, der fluchtend in die Substratplatte eingesetzt und mit einer Auswurfstange verbunden ist, von der Substratplatte entfernt wird.

Schließlich kann das Verfahren weiter fortgebildet werden, indem nach der Fertigstellung des Formkörpers unausgehärtete Flüssigkeit von dem Formkörper entfernt wird, indem die Substratplatte rotiert wird.

Hinsichtlich der in diesen Verfahren und den Verfahrensfortbildungen definierten Verfahrensmerkmale wird Bezug genommen auf die dazu korrespondierenden Vorrichtungsmerkmale, nach denen die Vorrichtungen vorzugsweise ausgebildet sein können, um diese Verfahrensschritte in der erfindungsgemäßen Vorrichtung umzusetzen. Die hierzu gegebenen Erläuterungen, Alternativen und Vorteile sind analog auf die entsprechenden Fortbildungen des erfindungsgemäßen Verfahrens anwendbar.

Eine bevorzugte Ausführungsform wird anhand der beiliegenden Figuren erläutert. Es zeigen:

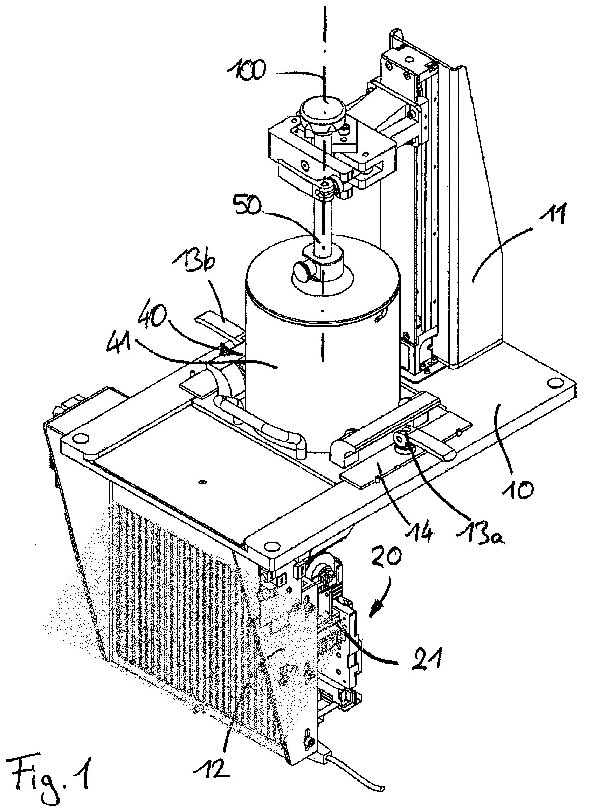

- Figur 1: eine perspektivische Ansicht einer bevorzugten Ausführungsform der Erfindung von schräg seitlich oben,

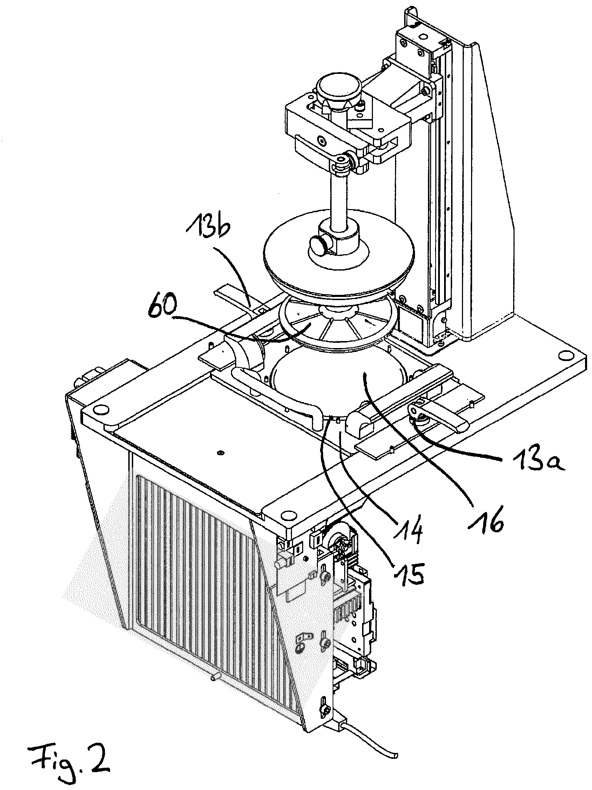

- Figur 2: eine Ansicht gemäß Figur 1 mit entferntem Behälter,

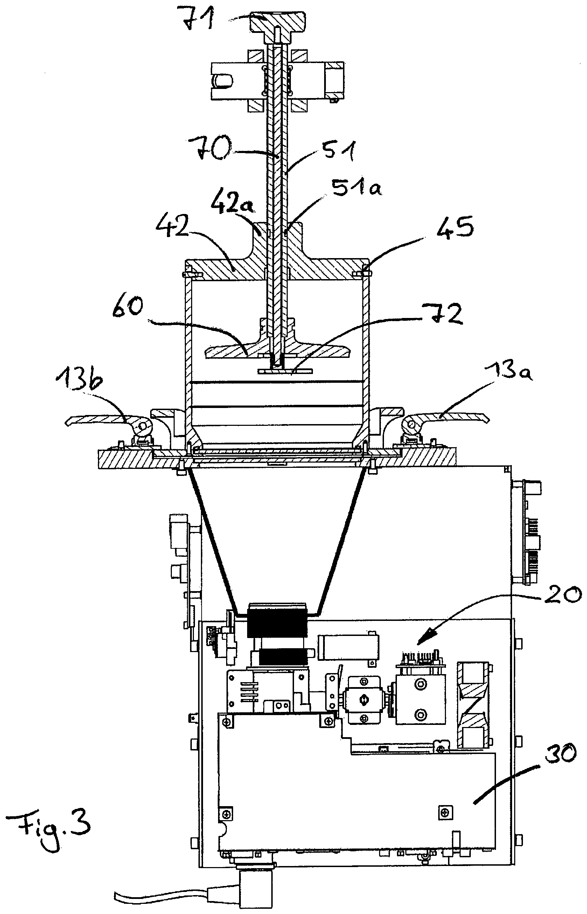

- Figur 3: eine längsgeschnittene Frontalansicht der Ausführungsform gemäß Figur 1,
- Figur 4: eine längsgeschnittene Seitenansicht der Ausführungsform gemäß Figur 1, mit
- Figur 4a: eine Detailansicht des Bereichs X in Fig. 4,
- Figur 5: eine längsgeschnittene perspektivische Ansicht der Ausführungsform gemäß Figur 1 von schräg unten, mit
- Figur 5a: eine Detailansicht des Bereichs Y in Fig. 5, und
- Fig. 6: eine längsgeschnittene Rückansicht der Bestrahlungsvorrichtung der Ausführungsform nach Figur 1,

Bezugnehmend auf die Figuren weist eine erfindungsgemäße Stereolithografievorrichtung eine Rahmenvorrichtung auf, die grundsätzlich aus einer Rahmengrundplatte 10, einer darauf aufgesetzten Rahmensäule 11 und einem an der Unterseite der Rahmengrundplatte 10 befestigten Rahmengestell 12 zusammengesetzt ist. An dem Rahmengestell 12 ist eine Bestrahlungsvorrichtung 20 befestigt, die grundsätzlich unterhalb der Basisgrundplatte 10 angeordnet ist. Die Bestrahlungsvorrichtung ist als Projektor ausgeführt und umfasst eine digitale Projektoreinheit 21 mit Objektiv, die beispielsweise in LCD-, DLP-, LED-, LCOS-Projektortechnik ausgeführt sein kann. Mit Hilfe des Projektors kann ein gesamtes Bild projiziert werden und hierdurch eine selektive Bestrahlung bestimmter Abschnitte innerhalb einer Schichtebene erreicht werden.

Die Projektoreinheit 21 ist unterhalb der Basisgrundplatte angeordnet und weist einen vertikal nach oben ausgerichteten Strahlengang auf. Die Projektoreinheit 21 ist mit einer Steuerungseinrichtung 30 gekoppelt, welche über einen externen Signaleingang verfügt, mit dem die Bildabfolge der Projektoreinheit 21 für die einzelnen sequenziellen Fertigungsschritte des schichtweisen Aufbaus des dreidimensionalen Formkörpers gesteuert werden können.

Es ist grundsätzlich zu verstehen, dass anstelle der Projektoreinheit mit Objektiv auch andere Bestrahlungsvorrichtungen vorgesehen sein können, beispielsweise auch eine Bestrahlung mittels Laser, der durch geeignete Spiegel oder sonstige Ablenkungssysteme solcherart gelenkt werden kann, dass eine selektive Bestrahlung mittels des Lasers erfolgt.

Die Bestrahlungsvorrichtung 20 ist von unterhalb auf ein Fenster 16 gerichtet, das in die Rahmengrundplatte 10 eingesetzt ist. Seitlich von dem Fenster 16 sind Kopplungseinrichtungen 13a, b an der Rahmengrundplatte 10 befestigt. Diese Kopplungseinrichtungen 13a, b dienen dazu, um eine Behältertragplatte 14 in einer definierten Position in Bezug auf die Rahmengrundplatte 10 zu arretieren und weisen zu diesem Zweck entsprechende Kniehebelelemente auf.

In der Behältertragplatte 14 ist eine Öffnung ausgebildet, die von einer ringförmigen Positionierungshilfe 15 umgeben ist. Die Positionierungshilfe 15 ist als Zentrierungsring ausgeführt und dient dazu, einen Behälter 40 in einer definierten Position auf der Behältertragplatte 14 und damit in einer definierten Position zu der Rahmengrundplatte 10 zu positionieren.

Der Behälter 40 ist als zylindrischer Behälter mit einer im Querschnitt kreisförmigen Seitenwand 41 ausgeführt. Die Seitenwand 41 ist aus einem Material gefertigt, welches für die Strahlung der Bestrahlungsvorrichtung 20 undurchlässig ist, insbesondere handelt es sich um ein Material, das für sichtbares Licht und UV-Licht undurchlässig ist. Die Längsachse des zylindrischen Behälters 40 erstreckt sich vertikal und ist mit dem Bezugszeichen 100 gekennzeichnet.

Entlang der Längsachse 100 erstreckt sich eine Kopplungsstange 50 von oberhalb in den Behälterinnenraum des Behälters 40. Die Kopplungsstange 50 trägt an ihrem unteren Ende eine Substratplatte 60, die als im Querschnitt kreisförmige und somit tellerartige Substratplatte ausgebildet ist. Die Substratplatte 60 ist fest mit der Kopplungsstange 50 verbunden.

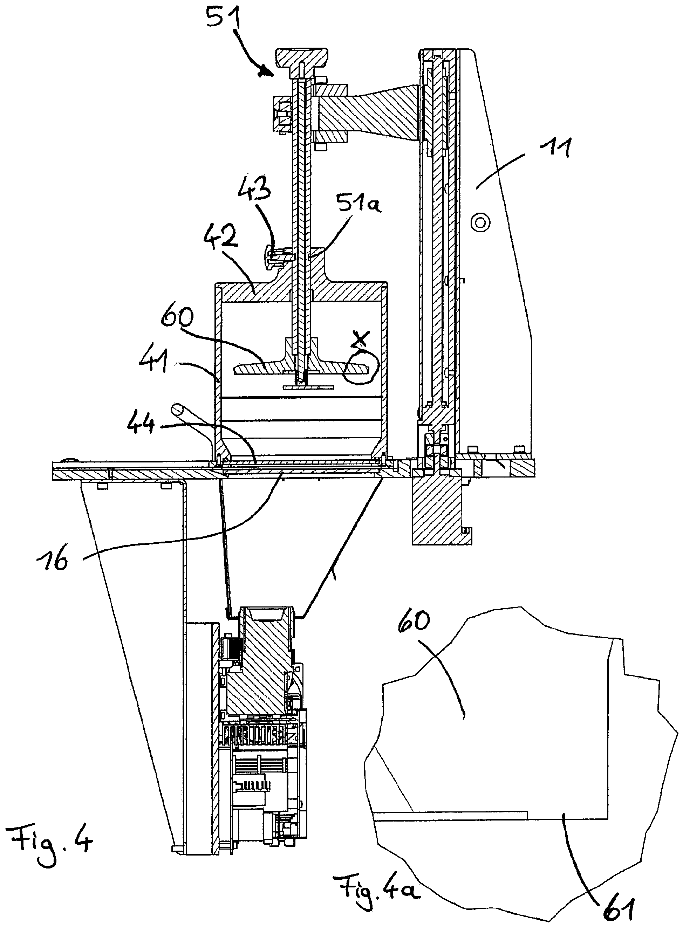

Die Substratplatte weist an ihrem äußeren Rand einen in der Detailansicht nach Fig. 4a erkennbaren, umlaufenden Kragen 61 auf, der sich um eine geringe Höhe von 0,05mm nach unten erstreckt. Der Kragen dient dazu, eine für die Herstellung der ersten Schicht passenden Abstand zwischen Substratplatte 60 und einer oberhalb einer Bodenplatte 44 des Behälters 40 angeordneten Antihaftfolie 44a bereitzustellen. Zudem sorgt der Kragen 61 dafür, dass bei Relativbewegung zwischen der Substratplatte und der Antihaftfolie die Antihaftfolie 44a nicht in dem relevanten Belichtungsbereich in der Mitte, sondern nur im außenliegenden Bereich des Kragens einem Verschleiß unterliegen kann.

Die Kopplungsstange ist mittels einer Kopplungsstangen-Klemmeinheit 51 an der Rahmensäule 11 befestigt. Die Kopplungsstangen-Klemmeinheit 51 umfasst wiederum eine Kniehebel-Klemmeinrichtung und ist ausgebildet, um die Kopplungsstange kraftschlüssig zu klemmen. Gegebenenfalls kann ein Formschluss zwischen Kopplungsstange und Kopplungsstangen-Klemmeinheit vorgesehen sein, der eine definierte Position der Kopplungsstange in Längsrichtung der Achse 100 zwischen Kopplungsstangen-Klemmeinheit 51 und Kopplungsstange 50 herstellt, um eine exakte Referenzierung der Lage der Kopplungsstange in Bezug auf die Rahmenvorrichtung 10, 11 zu erzielen.

Die Kopplungstange weist eine Ringnut 50a auf, die in ihre äußere Umfangsfläche auf einer Höhe eingearbeitet ist, dass ein in dieser Ringnut eingreifender Haltestift 43 die Kopplungsstange 50 axial abstützt. In dieser abgestützten Lage ist die Substratplatte 60 in eine obererste Position angehoben und ein fertiggestellter Formkörper typischerweise außerhalb des Flüssigkeitsbades angeordnet. Diese solcher Art axial fixierte Position erlaubt eine Drehbewegung, die über die Substratplatte auf den Formkörper ausgeübt wird und kann dazu dienen, um überschüssige Flüssigkeit von dem Formkörper abzuschleudern. Diese überschüssige Flüssigkeit wird dann an die Seitenwände 41 geschleudert und kann in das Flüssgkeitsbad abfließen bzw. abtropfen und so zurückgewonnen werden.

Die Kopplungsstangen-Klemmeinheit 51 ist an der Rahmensäule 11 verschieblich geführt für eine Bewegung in Richtung der Zylinderlängsachse 100. Innerhalb der Rahmensäule 11 ist eine Aktuatoreinheit angeordnet, welche dazu dient, die Kopplungsstangen-Klemmeinheit und folglich die daran befestigte Kopplungsstange 50 in vertikaler Richtung zu bewegen und hierdurch die für die schichtweise Herstellung eines Formkörpers auf der Substratplatte notwendige sukzessive vertikale Bewegung bereitzustellen. Die Aktuatoreinheit innerhalb der Rahmensäule 11 ist vorzugsweise als Spindeltrieb ausgeführt, der über einen Schrittmotor angetrieben wird.

Zwischen der Kopplungsstangen-Klemmeinheit 51 und der Substratplatte 60 ist die Kopplungsstange 50 in einem Deckel 42 für eine axiale Bewegung in ihrer Längsrichtung geführt. Der Deckel 42 ist ebenfalls aus einem für die Strahlung der Bestrahlungsvorrichtung 20 undurchlässigen Material gefertigt, insbesondere aus einem Material, das für sichtbares Licht und UV-Strahlung undurchlässig ist. Der Deckel 42 ist mittels eines Absatzes mit O-Ring-Dichtung fluiddicht in die an der Oberseite der Seitenwand 41 des Behälters gebildete Öffnung eingesetzt. Eine mittige Bohrung in dem Deckel sorgt für die axiale Führung der Kopplungsstange 50. Die Kopplungsstange 50 kann mittels einer radial in die Bohrung in dem Deckel eingreifende Schraube 43 in dem Deckel mithilfe der Ringnut 50a axial fixiert werden, um eine bestimmte vertikale Position der Substratplatte 60 innerhalb des Behälters 40 zu fixieren.

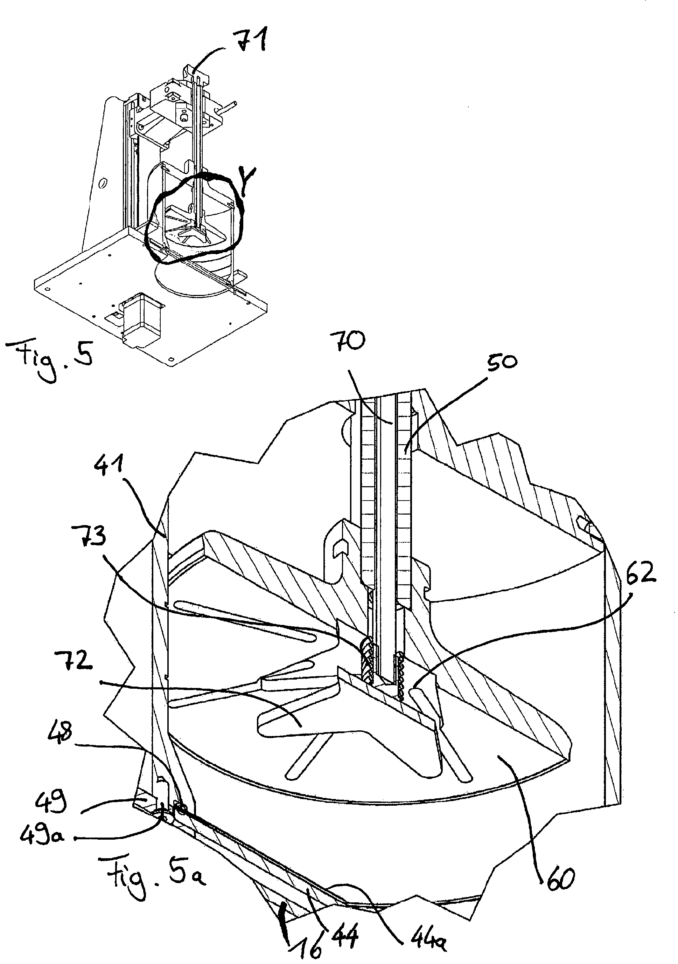

Die Figuren 5 und 5a zeigen einen Auswerfermechanismus, der zum Ablösen eines fertiggestellten Formkörpers von der Substratplatte dient. Der Auswerfermechanismus umfasst eine Auswerferstange 70, die innerhalb der als Hohlstange ausgeführten Kopplungsstange 50 geführt wird und koaxial zu der Kopplungsstange 50 verläuft. Am oberen Ende der Auswerferstange 70 ist ein Handgriff 71 angeordnet, der zur Übertragung einer Längskraft auf die Auswerferstange und einer Rotation auf die Auswerferstange dient. Die Auswerferstange 70 erstreckt sich vollständig durch die Kopplungsstange 50 und ist am unteren Ende im Bereich der Substratplatte 60 mit einer Auswerferplatte 72 verbunden. Die Auswerferplatte 72 weist eine sternförmige Geometrie auf und fügt sich in eine entsprechende sternförmige Ausnehmung 62 in der Substratplatte 60 ein. Hierdurch wird ein gegen eine Rotation zwischen Auswerferplatte und Substratplatte bzw. Kopplungsstange wirkender Formschluss bewirkt. An ihrem oberen Ende weist die Auswerferstange ein Außengewinde auf, welches mit eibnem Innengewinde im Handgriff 71 zusammenwirkt. Der Handgriff 71 stützt sich auf dem oberen stirnseitigen Ende der Kopplungsstange 50 auf, durch Drehen des Handgriffes 71 um die Längsachse 100 kann die Betätigungsstange daher relativ zur Kopplungsstange bewegt werden und insbesondere in die Angehobene Position gezogen werden. Wenn die Auswerferstange 70 nach oben in ihrer maximalen Endposition angeordnet ist, liegt die sternförmige Auswerferplatte 72 in der entsprechend sternförmigen Ausnehmung 62 der Substratplatte 60 und die unteren Oberflächen von Auswerferplatte 72 und Substratplatte 60 sind fluchtend. Die Auswerferplatte 72 wird mittels einer Schraubenfeder 73 , die als Druckfeder ausgeführt ist, in dieser oberen Position vorgespannt. Wird der Handgriff 71 gedreht und hierdurch die Auswerferstange aus der obersten Position abgesenkt, so bewirkt diese Schraubenfeder eine Auswurfkraft auf die Auswerferplatte, die zum Ablösen eines fertiggestellten Formkörpers von der Substratplatte ausreichend ist und gegebenefalls, bei fest an der Substratplatte anhaftenden Formkörpern durch Druckausübung auf den Handgriff 71 verstärkt werden kann.

Durch die Federkraft und den gfs. zusätzlich ausgeübten Druck tritt die Auswerferplatte mit Ihrer unteren Fläche über die untere Fläche der Substratplatte 60 hinaus bzw. übt einen Druck auf ein auf der Substratplatte und der Auswerferplatte aufgebauten Formkörper aus. Der Formkörper wird hierdurch von der Oberfläche der Substratplatte abgelöst.

Gegebenenfalls haftet der Formkörper dann noch an der Oberfläche der Auswerferplatte 72. Grundsätzlich kann die Prozesssteuerung bei der Herstellung bei der ersten Schicht, die unmittelbar auf der Substratplatte 60 aufgebaut ist, jedoch auch solcher Art erfolgen, dass eine Belichtung in dem sternförmigen Bereich der Auswerferplatte 72 unterbleibt, wodurch sich hier ein Hohlraum bildet und keine Anhaftung an der Auswerferplatte stattfindet. Hierdurch kann ein vollständiges Ablösen des Formkörpers von der Substratplatte mittels der Auswerferplatte 72 erreicht werden.

Durch die sternförmige Kontur der Auswerferplatte 72 und der Ausnehmung 62 wird ein Formschluss zwischen der Auswerferplatte 72 und der Substratplatte 60 erzielt. Dieser Formschluss kann eine über den Handgriff 71 eingeleitete Rotationsbewegung von der Auswerferstange 70 auf die Substratplatte 60 bertragen. Hierdurch wird es möglich, eine Rotationsbewegung auf die Substratplatte und einen daran angeformten Formkörper aufzubringen. Diese Rotationsbewegung ist insbesondere hilfreich, wenn die Kopplungsstange mithilfe der Ringnut 50a in einer angehobenen Position arretiert ist und der fertiggestellte Formkörper hierdurch oberhalb des Flüssigkeitsbades gehalten wird, um durch die hierdurch hervorgerufenen Zentrifugalkräfte nicht ausgehärtete Flüssigkeit von dem Formkörper abzuschleudern und in das Flüssigkeitsbad abtropfen zu lassen.

Figur 5a zeigt weiterhin den Aufbau aus der FEP-Folie bzw. Antihaftfolie 44a, die zuoberst liegt und zum Innenraum des Behälters 40 weist und der unmittelbar darunter angeordneten Bodenplatte 44 des Behälters 40, die typischerweise aus Glas besteht. Im Randbereich sind die Bodenplatte und die FEP-Folie durch eine umlaufendne O-Ring 48 gegenüber der Seitenwand 41 und gegeneinander abgedichtet. Die Glasplatte wird hierbei mittels eines unten liegenden Flansches 49 mit einer Flanschverschraubung 49a befestigt und die O-Ring-Dichtung hierdurch gequetscht und damit die Dichtungswirkung erzielt.

Der Behälter weist an seiner Unterseite die strahlungsdurchlässige Bodenplatte 44 auf. Die Bodenplatte ist formschlüssig und abgedichtet in die Behälterseitenwand 41 eingesetzt und ermöglicht den Durchtritt der Strahlung aus der Bestrahlungsvorrichtung 20 in den Behälterinnenraum und insbesondere auf die Unterseite der Substratplatte 60.

Auf der Oberseite der Bodenplatte, also auf der zum Behälterinnenraum weisenden Seite, ist, wie aus der Detailansicht nach Fig. 5a erkennbar, die FEP-Folie 44a angeordnet, die über ihren gesamten Umfang zwischen Seitenwand und Bodenplatte des Behälters fluiddicht eingespannt ist. Zwischen der Bodenplatte und der FEP-Folie ist ein sehr geringes Gasvolumen, das in vertikaler Richtung eine Dicke von vorzugsweise nicht mehr als 0,1mm aufweist, eingeschlossen. Diese Einspannung der Folie in Verbindung mit dem fluiddicht eingeschlossenen Volumen ermöglicht ein kraftarmes Abtrennen des Formkörpers von der Folie durch vertikales Anheben des Formkörpers mittels eines Schäleffektes, der duch eine Geometrieänderung des fluiddicht eingeschlossenen Volumens erzielt wird.

Der Deckel 42 wird durch seitliche Stifte 45 nach Art eines Bayonettverschlusses in der Seitenwand 41 des Behälters 40 arretiert. Der Behälter 40 und die Substratplatte 60 sind als eine Baueinheit vormontiert, welche weiterhin den Deckel 42 umfasst. Diese vormontierte Baueinheit aus Behälter 40 und Substratplatte 60 kann dann in die Rahmenvorrichtung eingesetzt werden, indem der Behälter mit seiner Unterseite in den Zentrierring 15 eingesetzt wird. Hierauf folgend kann die Kopplungsstange 50 mittels der Kopplungsstangen-Klemmeinheit 51 an der Rahmensäule 11 festgesetzt werden und damit die Kopplung für eine vertikale Verschiebung der Substratplatte 60 hergestellt werden.

Nach Lösung der Kopplungsstangen-Klemmeinheit 51 kann der Behälter 40 mitsamt der Kopplungsstange 50 und der darin angeordneten Substratplatte 60 auf der Rahmengrundplatte 10 verschoben werden, indem die Kopplungsvorrichtungen 13a, b gelöst werden und die Behälterträgerplatte 14 mit Hilfe eines daran befestigten Griffes 16 nach vorne gezogen wird. Dies ermöglicht es, die gesamte Baueinheit aus Behälterträgerplatte 14, Behälter 40, Substratplatte 60 und Kopplungsstange 50 aus der Vorrichtung zu entnehmen oder zu verschieben, oder diese Komponenten gemeinsam in die Stereolithografievorrichtung einzusetzen. Hierdurch wird ein schneller Austausch des Behälters mitsamt der darin befindlichen Flüssigkeit ermöglicht, sodass nach einem abgeschlossenen Herstellungsvorgang eines dreidimensionalen Formkörpers innerhalb des Behälters auf der Unterseite der Substratplatte 60 unmittelbar eine Fertigung in einem zweiten Behälter durch entsprechenden Austausch durchgeführt werden kann. Die Taktzeiten der Fertigung, die mit der erfindungsgemäßen Stereolithografievorrichtung erreichbar sind, werden dadurch gegenüber dem Stand der Technik erheblich reduziert bei einer gleichzeitigen Verbesserung der langzeitigen Qualität der aushärtbaren Flüssigkeit innerhalb der für die Fertigung verwendeten Behälter aufgrund von deren Kapselung gegenüber Verschmutzung und Lichteinwirkung innerhalb des Behälters 40.

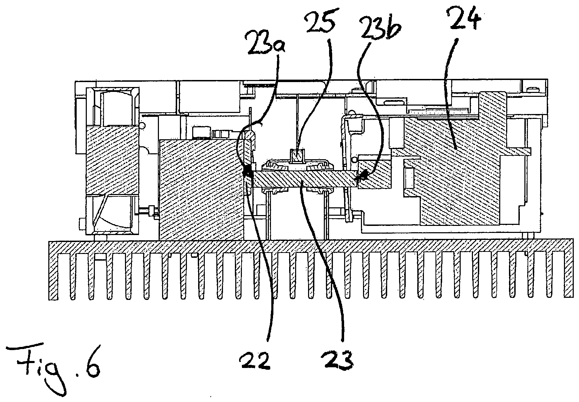

Figur 6 zeigt die Bestrahlungsvorrichtung 20 in einer geschnittenen Darstellung. Die Bestrahlungsvorrichtung 20 umfasst eine leistungstarke LED 22, die eine Strahlung mit Anteilen von optisch sichtbarem Licht in einer horizontalen Richtung abstrahlt. Das Licht wird praktisch vollständig in einem Lichthomogenisierer 23 eingekoppelt. Der Lichthomogenisierer ist ein im Querschnitt sechseckiger Stab, der sich in einer horizontal liegenden Längsrichtung erstreckt und aus Borosilikat-Kronglas hergestellt ist. Dieser Lichthomogenisierer sorgt dafür, dass an seinem Eintrittsende 23a eintretendes inhomogenes Licht der LED 22 durch mehrfache Reflektion an den Seitenwänden des Lichthomogenisierers homogenisiert wird und als homogenes Lichtfeld auf der stirnseitigen Austrittsfläche 23b austritt.

Von der Austrittsfläche 23b ausgehend fällt das Licht in eine Öffnung einer Bildwandlervorrichtung 24. Die Bildwandlervorrichtung 24 kann als DLP-Element oder in LCD-Technik ausgeführt sein. Die Bildwandlervorrichtung 24 wird von der Steuerungseinheit angesteuert und erzeugt aus dem homogenen einfallenden Lichtstrahl ein maskiertes Bild, das ein Abbild der Querschnittsfläche des herzustellenden Formkörpers darstellt, korrespondierend zu der jeweils herzustellenden Schicht. Dabei sind alle Bereiche des Formkörpers, die massiv sind und folglich eine Aushärtung aus der Flüssigkeit erfahren sollen, unmaskiert und werden mit dem homogenen Licht belichtet, wohingegen alle anderen Bereiche maskiert sind und folglich nicht belichtet werden.

Innerhalb der Bildwandlervorrichtung 24 wird das homogene und maskierte Licht dann um 90° gespiegelt und tritt nach vertikal oben aus der Bestrahlungvorrichtung 20 aus.

Seitlich an dem Lichthomogenisierer 23 ist ein Lichtintensitätssensor 25 angeordnet. Der Lichtintensitätssensor ist in ein Abdeckblech, welches benachbart zum Lichthomogenisierer 23 angeordnet ist, eingesetzt und erfasst eine Lichtintensität der Seitenwand des Lichthomogenisierers 23. Diese Lichtintensität korreliert mit der Lichtintensität, die von der LED 22 abgestrahlt wird und durch den Lichthomogenisierer 23 hindurchläuft. Der Lichtintensitätssensor 25 ist mit der Steuerungseinheit 30 zur Signalübertragung verbunden und übermittelt an die Steuerungseinheit 30 ein der Lichtintensität der LED korrelierendes Signal, was innerhalb der Steuerungseinheit für die Ablaufsteuerung des Produktionsprozesses verwendet.

Der Lichtintensitätssensor kann als Fotodiode ausgeführt sein und ermöglicht dann gleichzeitig den Betrieb als Temperatursensor aufgrund der etwa sich linear mit der Temperatur verändernden Durchlasspannung des P-N- Halbleiterdurchgangs. Der kombinierte Lichtintensitäts-/tTemperatursensor kann dann wechselweise die Lichintensität und die Temperatur messen und ermöglicht daher eine temperaturkorrigierte Erfassung der Lichtintensität. Durch Temperaturänderungen hervorgerufenen driftungsbedingte Ungenauigkeiten der Messwerte des Lichtintensitätssensors können auf diese Weise kompensiert werden. Alternativ hierzu ist es möglich, benachbart zum Lichtintensitätssensor einen separaten temperatursensor anzuordnen und die Temperatur des Lichtintensitätssensors über diesen Temperatursensor zu erfassen.

Ein erfindungsgemäßer Ablauf eines Fertigungsverfahrens findet dabei wie folgt statt:
Ein mit der aushärtbaren Flüssigkeit gefüllter Behälter 40 wird mit der Substratplatte 60, die an der Kopplungsstange 50 befestigt ist, und einem Behälterdeckel 42, der diese Substratplatte in axialer Richtung führt, vormontiert. Diese vormontierte Baueinheit aus Behälter und Substratplatte sowie Kopplungsstange wird dann auf die Behältertragplatte 14 aufgesetzt und die Behältertragplatte 14 dann in die Fertigungsposition, wie sie in den Figuren abgebildet ist, verschoben und mittels der Kopplungsvorrichtung 13a, b in dieser Position arretiert.

Die Substratplatte 60 liegt dabei auf der Antihaftfolie 44a oberhalb der Bodenplatte 44 des Behälters 40 in einer durch den Kragen 61 definierten Referenzposition auf. In dieser Position wird die Substratplatte 60 belassen und die Kopplungsstange 50 mittels der Kopplungsstangen-Klemmeinheit 51 mit der Aktuatoreinheit für die vertikale Bewegung der Substratplatte gekoppelt.

Dies sind bereits alle vorbereitenden Handhabungsschritte für die Durchführung des stereolithographischen Herstellungsverfahrens. Nachdem oder auch bevor die Baueinheit in die Stereolithografievorrichtung eingesetzt wurde, wurden die für die selektive Bestrahlung der einzelnen Schichten erforderlichen Daten an die Steuerungseinheit 30 übermittelt. Diese Übermittlung kann jedoch auch in Echtzeit während des Fertigungsprozesses über eine entsprechende Schnittstelle aus einer externen Steuerung erfolgen.

Der Behälter weist an seiner Unterseite die strahlungsdurchlässige Bodenplatte 44 auf. Die Bodenplatte ist formschlüssig und abgedichtet in die Behälterseitenwand 41 eingesetzt und ermöglicht den Durchtritt der Strahlung aus der Bestrahlungsvorrichtung 20 in den Behälterinnenraum und insbesondere auf die Unterseite der Substratplatte 60.

Nachdem die Kopplungsstangen-Klemmeinheit 51 an der Kopplungsstange 50 befestigt ist, wird durch die Aktuatoreinheit die Substratplatte zunächst um mehrere Schichtstärken angehoben, beispielsweise um eine Wegstrecke von 2 cm und wieder in die Ursprungsposition aufliegend auf der Bodenplatte abgesenkt, um eine Durchmischung der Flüssigkeit in dem Behälter zu erzielen. Dieser Vorgang kann gegebenefalls mehrfach durchgeführt werden.

Über die Steuerungsvorrichtung 30 oder gegebenenfalls die externe Steuerung wird dann der Fertigungsablauf gesteuert. Die erste Schicht kann unmittelbar durch Belichtung hergestellt werden, da die Substratplatte durch den Kragen 61 bereits in einem dafür geeigneten Abstand auf der Antihaftfolie 44a aufliegt. Danach wird die zweite Schicht hergestellt. Hierzu wird in einem ersten Schritt mittels der Aktuatoreinheit über die Kopplungsstangen-Klemmeinheit 51 und die Kopplungsstange 50 die Substratplatte 60 um mehrere Schichtdicken von der angehoben. Hierdurch wird die Antihaftfolie von der ersten hergestellten Schicht abgetrennt. Dieser Abtrennprozess wird durch einen Schäleffekt unterstützt, der durch einen Unterdruck, der sich zwischen der Antihaftfolie 44a und der Bodenplatte 44 ausbildet und die vertikal nach oben gerichtete Abzugskraft der Substratplatte erzeugt wird. Die Wegstrecke, um welche die Substratplatte angehoben wird, um die Ablösung zu erzielen, kann mittels eines Kraftsensors gesteuert werden, der die Anhebekraft misst und die Ablösung als plötzlichen Kraftabfall registriert.

Alternativ kann die Wegstrecke, um welche die Substratplatte von der Antihaftfolie angehoben wird, um die Ablösung der Antihaftfolie zu erzielen, in einer Steuerungseinheit aus der Größe der Fläche der zuvor bestrahlten Schicht ermittelt werden. Dabei gilt ein Zusammenhang, dass die Wegstrecke umso größer sein muss, je größer die bestrahlte Fläche der zuvor erzeugten Schicht war, d.h. je höher die Anzahl der zuvor bestrahlten Pixel war.

Nachdem die Substratplatte um die Wegstrecke angehoben wurde und die Antihaftfolie von der zuletzt erzeugten Schicht abgelöst ist, wird die Substratplatte wieder abgesenkt. Diese Absenkung erfolgt um die Wegstrecke abzüglich der Schichtdicke der nächsten zu erzeugenden Schicht. Dadurch stellt sich nach dieser Absenkung ein Spalt zwischen der zuletzt erzeugten Schicht und der Antihaftfolie ein, welcher der Schichtdicke der nächsten zu erzeugenden Schicht entspricht.

Durch den Füllstand des flüssigen, aushärtbaren Materials in dem Bereich 40 wird das Material in den so entstandenen Zwischenraum zwischen Bodenplatte und Substratplatte bei Aufwärtsbewegung der Substratplatte hineingesogen bzw. fließt dort hinein. Daher ist der Spalt nach Absenkung der Substratplatte zuverlässig mit Flüssigkeit gefüllt.

Hierauf folgend erfolgt durch ein entsprechendes Bild aus der Projektoreinheit 21 eine Belichtung der so gebildeten Schicht, die zur selektiven Aushärtung bestimmter Bereiche dieser Schicht führt. Durch die Beschichtung der Bodenplatte des Behälters 40 haften diese ausgehärteten Bereiche nicht an der Bodenplatte an, sondern nur an der Substratplatte.

Darauf folgend wird die Aktuatoreinheit wiederum angesteuert, um die Substratplatte 60 um eine weitere Schichtstärke anzuheben. Hierdurch entsteht wiederum ein Spalt in Schichtstärke zwischen der zuvor ausgehärteten Schicht und der Bodenplatte des Behälters. Dieser Spalt füllt sich wiederum mit dem flüssigen, aushärtbaren Material und wird wiederum durch entsprechende Belichtung mit einem Bild, das der Querschnittsgeometrie des auszubildenden Formkörpers in dieser Schicht entspricht, belichtet und somit ausgehärtet. Die ausgehärteten Bereiche der Schicht verbinden sich dabei mit der zuvor ausgehärteten Schicht, nicht jedoch mit der Bodenplatte des Behälters 40.

Diese Abfolge wird sukzessive mehrfach wiederholt, bis der gesamte Formkörper auf diese Art und Weise schichtweise aufgebaut ist. Hierauf folgend wird die Substratplatte 60 durch die Aktuatoreinheit in eine angehobene Position oberhalb des Flüssigkeitsbads angehoben, sodass der Formkörper abtropfen kann. Nach einem bestimmten Zeitraum kann die Baueinheit aus Behälter, Substratplatte mit daran jetzt ausgebildetem Formkörper und Kopplungsstange durch Lösung der Klemmung durch die Kopplungsstangen-Klemmeinheit 51 und Vorziehen der Behälterträgerplatte 14 bequem aus der Stereolithografievorrichtung entnommen werden, um den hergestellten Formkörper dann von der Substratplatte vorsichtig abzutrennen. Unmittelbar nach Entnahme der Baueinheit kann eine zweite Baueinheit aus Behälter, Substratplatte und Deckel sowie Kopplungsstange auf die Behälterträgerplatte 14 aufgesetzt werden und ein zweiter Fertigungsprozess unmittelbar gestartet werden.

## Patentansprüche

1. Stereolithografievorrichtung, umfassend:
- Einen Behälter (40) zur Aufnahme eines flüssigen, durch Bestrahlung aushärtbaren Materials,
- eine Substratplatte (60),
- eine Aktuatoreinrichtung zur Erzeugung einer Relativbewegung zwischen dem Behälter und der Substratplatte,
- eine Bestrahlungsvorrichtung (20) zur selektiven Bestrahlung des in dem Behälter angeordneten Materials, die Bestrahlungsvorrichtung umfassend ▪ eine Strahlungsquelle,
- eine Steuerungseinrichtung (30) zur Steuerung der Bestrahlungsvorrichtung,
wobei die Aktuatoreinrichtung und die Bestrahlungsvorrichtung an einer Rahmenvorrichtung (10, 11, 12) befestigt sind und wobei
der Behälter und die Substratplatte zu einer Baueinheit zusammengefasst sind und die Baueinheit aus Behälter und Substratplatte gemeinsam in die Rahmenvorrichtung eingesetzt ist, darin mittels einer Befestigungsvorrichtung (13a, b, 15) lösbar befestigt ist und gemeinsam von der Rahmenvorrichtung zu entfernen ist, **dadurch gekennzeichnet, dass** die Bestrahlungsvorrichtung eine bildgebende Maskierungseinrichtung umfasst,
wobei der Behälter eine für die Strahlung der Bestrahlungsvorrichtung durchlässige Bodenplatte (44) aufweist und die Bestrahlungsvorrichtung ausgebildet ist, um die Bestrahlung von unten in den Behälter einzuleiten.

2. Stereolithografievorrichtung nach Anspruch 1,
**dadurch gekennzeichnet, dass** der Behälter eine für die Strahlung der Bestrahlungsvorrichtung undurchlässige Seitenwand (41) aufweist.

3. Stereolithografievorrichtung nach einem der vorhergehenden Ansprüche,
**gekennzeichnet durch** einen Deckel (42), der lösbar mit dem Behälter verbunden ist und den Behälter verschließt und der vorzugsweise für die Strahlung der Bestrahlungsvorrichtung undurchlässig ist.

4. Stereolithografievorrichtung nach Anspruch 3,
**dadurch gekennzeichnet, dass** die Aktuatoreinrichtung eine Kopplungsstange (50) umfasst, die mit der Substratplatte verbunden ist und die sich durch den Deckel erstreckt und die vorzugsweise in dem Deckel für eine axiale Bewegung in Längsrichtung der Kopplungsstange geführt ist.

5. Stereolithografievorrichtung nach einem der vorhergehenden Ansprüche,
**dadurch gekennzeichnet, dass** die Aktuatoreinrichtung eine Kopplungsstange umfasst, die mit der Substratplatte verbunden ist und dass die Kopplungsstange mittels einer Kopplungseinrichtung lösbar mit einem mechanischen Aktuator gekoppelt ist zur Übertragung der Relativbewegung zwischen dem Behälter und der Substratplatte.

6. Stereolithografievorrichtung nach einem der vorhergehenden Ansprüche,
**gekennzeichnet durch** eine innerhalb des Behälters angeordnete Beleuchtungseinrichtung, die ausgebildet ist, um den Innenraum des Behälters mit einem sichtbaren Licht auszuleuchten, das eine Wellenlänge aufweist, die nicht zur Aushärtung des flüssigen Materials geeignet ist, oder
gekennzeichmnet durch einen zweiten Behälter mit einer innerhalb des zweiten Behälters angeordneten Beleuchtungseinrichtung, die ausgebildet ist, um den Innenraum des Behälters mit einer Strahlung auszuleuchten, die eine Wellenlänge aufweist, die zur Aushärtung des flüssigen Materials geeignet ist, wobei die Rahmenvorrichtung eine Befestigungseinheit zur wahlweisen Befestigung des Behälters oder des zweiten Behälters in einer definierten Position aufweist.

7. Stereolithografievorrichtung nach einem der vorhergehenden Ansprüche,
**gekennzeichnet durch** einen weiteren Behälter mit einem Deckel und einer innerhalb des weiteren Behälters angeordneten Substratplatte, die mit einer durch den Deckel hindurchgeführten Kopplungsstange verbunden ist,
wobei die Rahmenvorrichtung eine Befestigungseinheit zur wahlweisen Befestigung des Behälters oder des weiteren Behälters in einer definierten Position aufweist.

8. Stereolithografievorrichtung nach einem der vohergehenden Ansprüche,
**dadurch gekennzeichnet, dass** auf der zum Behälterinnenraum weisenden Seite der Bodenplatte
- eine Antihaftbeschichtung aufgebracht ist, oder
- eine Antihaftfolie (44a) angeordnet ist, die in ihrem Umfangsbereich fluiddicht gegenüber der Bodenplatte abgedichtet ist und ein sehr geringes Volumen zwischen Bodenplatte und Antihaftfolie einschließt.

9. Stereolithografievorrichtung nach einem der vohergehenden Ansprüche,
**dadurch gekennzeichnet, dass** die Bodenplatte lösbar und abgedichtet mit der Behälterseitenwand verbunden ist.

10. Stereolithografievorrichtung nach einem der Ansprüche 1-9,
**dadurch gekennzeichnet, dass** die Steuerungsvorrichtung ausgebildet ist, um die Schritte auszuführen, dass
- die Substratplatte vor dem Bestrahlen einer Schicht in eine Position verfahren wird, die einen Zwischenraum mit einem vorbestimmten Schichtabstand zwischen einer zuletzt hergestellten Schicht und einer Antihaftfolie bereitstellt,
- eine in dem Zwischenraum angeordnete Flüssigkeit hierauffolgend in bestimmten Bereichen selektiv bestrahlt und dadurch selektiv ausgehärtet wird,
- nach dem Bestrahlen der in dem Zwischenraum angeordneten Flüssigkeit die Substratplatte um eine Ablösewegstrecke bewegt wird, welche ausreichend ist, um die selektiv ausgehärteten Bereiche von der Antihaftfolie abgetrennt werden,
wobei die Steuerungsvorrichtung weiter ausgebildet ist, um die Ablösewegstrecke aus der Größe der selektiv ausgehärteten Bereiche der zuvor ausgehärteten Schicht, insbesondere aus einer Anzahl bestrahlter Pixel dieser Schicht, zu bestimmen.

11. Stereolithografievorrichtung nach einem der Ansprüche 1-9,
**gekennzeichnet durch** eine Auswerfervorrichtung, welche einen Stempel aufweist, der aus einer Fertigungsposition, in welcher der Stempel nicht über die Substratplatte hinausragt, in eine Auswurfposition, in welcher der Stempel über die Substratplatte hinausragt, bewegbar ist.

12. Stereolithografievorrichtung nach einem der vorhergehenden Ansprüche 1-9,
**dadurch gekennzeichnet, dass** die Substratplatte drehbar gelagert ist und dass vorzugsweise die drehbare Lagerung der Substratplatte lösbar rotationsgesichert werden kann.

13. Verfahren zur Herstellung dreidimensionaler Formkörper mittels Stereolithografie, mit den Schritten:
- Befestigen eines Behälters (41) mit einem darin angeordneten flüssigen, durch Bestrahlung aushärtbaren Material an einer Rahmenvorrichtung (10, 11,12),
- Schichtweises Herstellen des dreidimensionalen Formkörpers durch mehrfaches Wiederholen einer Schrittfolge mit den Schritten:
∘ Relatives Bewegen einer an der Rahmenvorrichtung lösbar befestigten Substratplatte (60) zu dem Behälter mittels einer an der Rahmenvorrichtung befestigten Aktuatoreinrichtung um eine vorbestimmte Schichtdicke,
∘ Füllen eines durch die relative Bewegung entstandenen Zwischenraums mit dem flüssigem Material, und
∘ Selektives Aushärten des in dem Zwischenraum angeordneten Materials indem mittels einer an der Rahmenvorrichtung befestigten Bestrahlungsvorrichtung (20) das Material in auszuhärtenden Bereichen selektiv bestrahlt wird,
wobei der Behälter und die Substratplatte als eine Baueinheit gemeinsam in die Rahmenvorrichtung eingesetzt werden,
**dadurch gekennzeichnet dass** das selektive Bestrahlen durch eine für die Strahlung der Bestrahlungsvorrichtung durchlässige Bodenplatte (44) erfolgt.

14. Verfahren nach Anspruch 13,
**dadurch gekennzeichnet, dass** eine mit der Substratplatte verbundene Kopplungsstange (50) sich durch den Deckel (42) erstreckt und in dem Deckel die relative Bewegung der Substratplatte zu dem Behälter als axiale Bewegung in Längsrichtung der Kopplungsstange geführt wird.

## Claims

1. Stereolithography apparatus, comprising:
- a container (40) to receive a fluid material curable by irradiation,
- a substrate plate (60),
- an actuator mechanism to generate a relative movement between the container and the substrate plate,
- an irradiation apparatus (20) to selectively irradiate the material arranged in the container, the irradiation apparatus comprising
▪ a radiation source,
- a control unit (30) to control the irradiation apparatus,
wherein the actuator mechanism and the irradiation apparatus are fastened to a frame apparatus (10, 11, 12) and wherein
the container and the substrate plate are combined into an assembly and the assembly made of the container and the substrate plate is inserted together into the frame apparatus, detachably fastened therein by means of a fastening apparatus (13a, b, 15) and to be removed together from the frame apparatus, **characterised in that** the irradiation apparatus comprises an imaging mask mechanism,
wherein the container has a base plate (44) permeable to the radiation of the irradiation apparatus and the irradiation apparatus is formed to introduce the irradiation from below into the container.

2. Stereolithography apparatus according to claim 1,
**characterised in that** the container has a side wall (41) impermeable to the radiation of the irradiation apparatus.

3. Stereolithography apparatus according to any one of the preceding claims,
**characterised by** a cover (42) which is detachably connected to the container and seals the container and which is preferably impermeable to the radiation of the irradiation apparatus.

4. Stereolithography apparatus according to claim 3,
**characterised in that** the actuator mechanism comprises a coupling rod (50) which is connected to the substrate plate and which extends through the cover and which is preferably guided in the cover for an axial movement in the longitudinal direction of the coupling rod.

5. Stereolithography apparatus according to any one of the preceding claims,
**characterised in that** the actuator mechanism comprises a coupling rod which is connected to the substrate plate and **in that** the coupling rod is detachably coupled by means of a coupling mechanism to a mechanical actuator to transfer the relative movement between the container and the substrate plate.

6. Stereolithography apparatus according to any one of the preceding claims,
**characterised by** an illumination mechanism arranged inside the container which is formed to illuminate the interior of the container with a visible light which has a wavelength that is not suitable for curing the fluid material, or
**characterised by** a second container with an illumination mechanism arranged inside the second container which is formed to illuminate the interior of the container with a radiation which has a wavelength that is suitable for curing the fluid material, wherein the frame apparatus has a fastening unit to selectively fasten the container or the second container in a defined position.

7. Stereolithography apparatus according to any one of the preceding claims,
**characterised by** a further container with a cover and a substrate plate arranged inside the further container which is connected to a coupling rod guided through the cover,
wherein the frame apparatus has a fastening unit to selectively fasten the container or the further container in a defined position.

8. Stereolithography apparatus according to any one of the preceding claims,
**characterised in that** on the side of the base plate pointing to the container interior,
- an non-stick coating is applied or
- an non-stick film (44a) is arranged which is sealed off from the base plate in its circumferential region in a fluid-tight manner and encloses a very low volume between base plate and non-stick film.

9. Stereolithography apparatus according to any one of the preceding claims,
**characterised in that** the base plate is connected to the container side wall in a detachable and sealed manner.

10. Stereolithography apparatus according to any one of claims 1-9,
**characterised in that** the control unit is formed to carry out the steps of
- moving the substrate plate, prior to irradiating a layer, into a position which provides an intermediate space with a predetermined layer spacing between a latest layer to be produced and an non-stick film,
- then selectively irradiating and thus selectively curing a fluid arranged in the intermediate space in determined areas,
- moving the substrate plate, after irradiating the fluid arranged in the intermediate space, by a detachment path which is sufficient to separate the selectively cured regions from the non-stick film,
wherein the control unit is further formed to determine the detachment path from the size of the selectively cured regions of the previously cured layer, in particular from a number of irradiated pixels of this layer.

11. Stereolithography apparatus according to any one of claims 1-9,
**characterised by** an ejector apparatus which has a stamp which is movable from a production position, in which the stamp does not protrude over the substrate plate, into an eject position, in which the stamp protrudes over the substrate plate.

12. Stereolithography apparatus according to any one of preceding claims 1-9,
**characterised in that** the substrate plate is rotatably supported and **in that** preferably the rotatable support of the substrate plate can be detachably secured against rotation.

13. Method for manufacturing three-dimensional moulded articles by means of stereolithography, with the steps of:
- fastening a container (41) with a fluid material arranged therein and curable by irradiation to a frame apparatus (10, 11, 12),
- manufacturing the three-dimensional moulded article in layers by repeating, multiple times, a sequence of steps, comprising the steps of:
∘ moving a substrate plate (60), which is detachably fastened to the frame apparatus, by a predetermined layer thickness relative to the container by means of an actuator mechanism, which is fastened to the frame apparatus,
∘ filling an intermediate space resulting from the relative movement with the fluid material and
∘ selectively curing the material arranged in the intermediate space by selectively irradiating the material in regions to be cured by means of an irradiation apparatus (20) fastened to the frame apparatus,
wherein the container and the substrate plate are inserted into the frame apparatus together as an assembly,
**characterised in that** selective irradiation takes place through a base plate (44) permeable to the radiation of the irradiation apparatus.

14. Method according to claim 13,
**characterised in that** a coupling rod (50) connected to the substrate plate extends through the cover (42) and in the cover the relative movement of the substrate plate to the container is performed as the axial movement in the longitudinal direction of the coupling rod.

## Revendications

1. Dispositif de stéréolithographie, comprenant
- un contenant (40) pour recevoir un matériau liquide, pouvant être durci par irradiation,
- une plaque de substrat (60),
- un système actionneur pour générer un déplacement relatif entre le contenant et la plaque de substrat,
- un dispositif d'irradiation (20) pour irradier de manière sélective le matériau disposé dans le contenant, le dispositif d'irradiation comprenant
- une source de rayonnement,
- un système de commande (30) pour commander le dispositif d'irradiation,
dans lequel le système actionneur et le dispositif d'irradiation sont fixés au niveau d'un dispositif de cadre (10, 11, 12), et dans lequel
le contenant et la plaque de substrat sont regroupés en une unité modulaire et l'unité modulaire composée du contenant et de la plaque de substrat est insérée conjointement dans le dispositif de cadre, y est fixée de manière amovible au moyen d'un dispositif de fixation (13a, b, 15) et est à retirer conjointement du dispositif de cadre, **caractérisé en ce que** le dispositif d'irradiation comprend un système de masquage d'imagerie,
dans lequel le contenant présente une plaque de fond (44) laissant passer le rayonnement du dispositif d'irradiation, et le dispositif d'irradiation est réalisé pour introduire l'irradiation depuis le bas dans le contenant.

2. Dispositif de stéréolithographie selon la revendication 1,
**caractérisé en ce que** le contenant présente une paroi latérale (41) ne laissant pas passer le rayonnement du dispositif d'irradiation.

3. Dispositif de stéréolithographie selon l'une quelconque des revendications précédentes,
**caractérisé par** un couvercle (42), qui est relié de manière amovible au contenant et ferme le contenant et qui de préférence ne laisse pas passer le rayonnement du dispositif d'irradiation.

4. Dispositif de stéréolithographie selon la revendication 3,
**caractérisé en ce que** le système actionneur comprend une tige de couplage (50), qui est reliée à la plaque de substrat et qui s'étend à travers le couvercle et qui est guidée de préférence dans le couvercle pour un déplacement axial dans le sens longitudinal de la tige de couplage.

5. Dispositif de stéréolithographie selon l'une quelconque des revendications précédentes,
**caractérisé en ce que** le système actionneur comprend une tige de couplage, qui est reliée à la plaque de substrat, et que la tige de couplage est couplée de manière amovible à un actionneur mécanique au moyen d'un système de couplage aux fins de la transmission du déplacement relatif entre le contenant et la plaque de substrat.

6. Dispositif de stéréolithographie selon l'une quelconque des revendications précédentes,
**caractérisé par** un système d'éclairage disposé à l'intérieur du contenant, qui est réalisé pour illuminer l'espace intérieur du contenant avec une lumière visible, qui présente une longueur d'onde, qui n'est pas adaptée au durcissement du matériau liquide, ou
**caractérisé par** un deuxième contenant avec un système d'éclairage disposé à l'intérieur du deuxième contenant, qui est réalisé pour illuminer l'espace intérieur du contenant avec un rayonnement, qui présente une longueur d'onde, qui est adaptée pour le durcissement du matériau liquide, dans lequel le dispositif de cadre présente une unité de fixation pour fixer au choix le contenant ou le deuxième contenant dans une position définie.

7. Dispositif de stéréolithographie selon l'une quelconque des revendications précédentes,
**caractérisé par** un autre contenant avec un couvercle et une plaque de substrat disposée à l'intérieur de l'autre contenant, qui est reliée à une tige de couplage guidée au travers du couvercle,
dans lequel le dispositif de cadre présente une unité de fixation pour fixer au choix le contenant ou l'autre contenant dans une position définie.

8. Dispositif de stéréolithographie selon l'une quelconque des revendications précédentes,
**caractérisé en ce que**
- un revêtement antiadhésif est appliqué ou
- un film antiadhésif (44a), qui est étanchéifié dans sa zone périphérique de manière étanche aux fluides par rapport à la plaque de fond et renferme un volume très faible entre la plaque de fond et le film antiadhésif, est disposé
sur le côté, pointant vers l'espace intérieur de contenant, de la plaque de fond.

9. Dispositif de stéréolithographie selon l'une quelconque des revendications précédentes,
**caractérisé en ce que** la plaque de fond est reliée de manière amovible et de manière étanchéifiée à la paroi latérale de contenant.

10. Dispositif de stéréolithographie selon l'une quelconque des revendications 1 à 9,
**caractérisé en ce que** le dispositif de commande est réalisé pour exécuter les étapes selon lesquelles
- la plaque de substrat est déplacée avant l'irradiation d'une couche dans une position, qui fournit un espace intermédiaire à un espacement de couche prédéterminé entre une couche fabriquée en dernier lieu et un film antiadhésif,
- un liquide disposé dans l'espace intérieur est par la suite irradié de manière sélective dans des zones déterminées et est ainsi durci de manière sélective,
- après l'irradiation du liquide disposé dans l'espace intermédiaire, la plaque de substrat est déplacée d'une distance parcourue de décollement, laquelle est suffisante pour séparer les zones durcies de manière sélective du film antiadhésif,
dans lequel le dispositif de commande est par ailleurs réalisé pour déterminer la distance parcourue de décollement à partir de la taille des zones durcies de manière sélective de la couche durcie au préalable, en particulier à partir d'un nombre de pixels irradiés de ladite couche.

11. Dispositif de stéréolithographie selon l'une quelconque des revendications 1 à 9,
**caractérisé par** un dispositif éjecteur, lequel présente un poinçon, qui peut être déplacé d'une position de production, dans laquelle le poinçon ne dépasse pas de la plaque de substrat, à une position d'éjection, dans laquelle le poinçon dépasse de la plaque de substrat.

12. Dispositif de stéréolithographie selon l'une quelconque des revendications précédentes 1 à 9,
**caractérisé en ce que** la plaque de substrat est montée de manière à pouvoir tourner, et que de préférence le montage rotatif de la plaque de substrat peut être bloqué contre toute rotation de manière amovible.

13. Procédé de fabrication de corps moulés tridimensionnels au moyen de la stéréolithographie, avec les étapes :
- de fixation d'un contenant (41) avec un matériau liquide disposé dans celui-ci, pouvant être durci par irradiation au niveau d'un dispositif de cadre (10, 11, 12),
- de fabrication couche par couche du corps moulé tridimensionnel en répétant une succession d'étapes avec les étapes :
∘ de déplacement relatif d'une plaque de substrat (60) fixée de manière amovible au niveau du dispositif de cadre vers le contenant au moyen d'un système actionneur fixé au niveau du dispositif de cadre d'une épaisseur de couche prédéterminée,
∘ de remplissage d'un espace intermédiaire apparu du fait du déplacement relatif avec le matériau liquide, et
∘ de durcissement sélectif du matériau disposé dans l'espace intermédiaire, en ce que le matériau est irradié de manière sélective dans des zones à durcir au moyen d'un dispositif d'irradiation (20) fixé au niveau du dispositif de cadre,
dans lequel le contenant et la plaque de substrat sont insérés en tant qu'une unité modulaire conjointement dans le dispositif de cadre,
**caractérisé en ce que** l'irradiation sélective est effectuée à travers une plaque de fond (44) laissant passer le rayonnement du dispositif d'irradiation.

14. Procédé selon la revendication 13,
**caractérisé en ce qu'**une tige de couplage (50) reliée à la plaque de substrat s'étend à travers le couvercle (42) et le déplacement relatif de la plaque de substrat vers le contenant est guidé dans le couvercle en tant que déplacement axial dans le sens longitudinal de la tige de couplage.
